Europäisches Patentamt

European Patent Office

Office européen des brevets

(19)

(11) **EP 1 363 219 A1**

(12) **EUROPEAN PATENT APPLICATION**

(43) Date of publication:
19.11.2003 Bulletin 2003/47

(51) Int Cl.⁷: **G06F 17/60**

(21) Application number: 03009863.6

(22) Date of filing: 14.05.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **15.05.2002 JP 2002140571**
**21.10.2002 JP 2002306290**

(71) Applicant: **Kabushiki Kaisha Toshiba**
**Tokyo (JP)**

(72) Inventors:
• **Murakami, Yoshiki, Int.Prop.Div., Toshiba Cor.**
**Tokyo (JP)**
• **Takezawa, Nobuhisa, Int.Prop.Div., Toshiba Cor.**
**Tokyo (JP)**

• **Uenohara, Yuji, Int.Prop.Div., Toshiba Cor.**
**Tokyo (JP)**
• **Kawashima, Masatoshi, Int.Prop.Div.,**
**Toshiba Cor.**
**Tokyo (JP)**
• **Kobayashi, Takenori, Int.Prop.Div., Toshiba Cor.**
**Tokyo (JP)**
• **Kano, Yuichi, Int.Prop.Div., Toshiba Cor.**
**Tokyo (JP)**
• **Tatsumi, Takahiro, Int.Prop.Div., Toshiba Cor.**
**Tokyo (JP)**
• **Hirai, Yasuo, Int.Prop.Div., Toshiba Cor.**
**Tokyo (JP)**

(74) Representative: **HOFFMANN - EITLE**
**Patent- und Rechtsanwälte**
**Arabellastrasse 4**
**81925 München (DE)**

(54) **Price evaluation system and method for derivatives, risk management system and method for power exchange**

(57) For a comprehensive risk evaluation of the electricity price fluctuations, respective relationships between power supplies or power demands and electricity prices are derived from data of historical power supply or power demand and data of historical electricity price for respective power exchanges, respective probability distributions of electricity price fluctuations relating to uncertain fluctuations of the power supply or the power demand are computed by using the respective relationships in a given period for evaluation of a market risk, the market risk of electricity price is measured by using the respective probability distributions of electricity price fluctuations, a probability distribution for randomly fluctuating components is derived by Monte Carlo simulation, and a market risk to the electricity price fluctuations is evaluated.

FIG. 19

**Description**

FIELD OF THE INVENTION

This invention relates to a price evaluation system and method for a derivative security, and a risk management system and method for a power exchange.

CROSS-REFERENCE TO RELATED APPLICATION

This application is based upon and claims the benefit of priority from the prior Japanese Patent Applications No. 2002-140571, filed on May 15, 2002 and No. 2002-306290, filed on October 21, 2002; the entire contents of which are incorporated herein by reference.

BACKGROUND OF THE INVENTION

Financial engineering technology is generally used to evaluate prices of derivatives of financial products. Financial engineering technology is applicable to markets for stocks, oil fuel, agricultural products and so on. In countries where power exchange is deregulated, financial technology is also applicable to electricity markets for hedging the market risk of electricity prices. When a power exchange is deregulated, electricity markets are established and electricity prices are determined by the markets. This means that electricity price fluctuates daily, and both power suppliers and buyers have to hedge the risk of electricity price fluctuations.

The Use of derivatives such as futures and options in stock markets is effective for hedging against electricity price fluctuations. A Future is a contract to purchase or sell underlying assets such as stocks or electricity at the given future time by the given price. An option is a right (but not an obligation) to buy or sell underlying assets at a certain future date by a certain future price (exercise price).

Risk-hedging of electricity price fluctuations is achievable through transactions of the underlying assets themselves and their derivatives such as futures and options traded in stock markets. Electricity price fluctuations, however, have different characteristics from those of stock price fluctuations because of difficulties in storage and their poor liquidity.

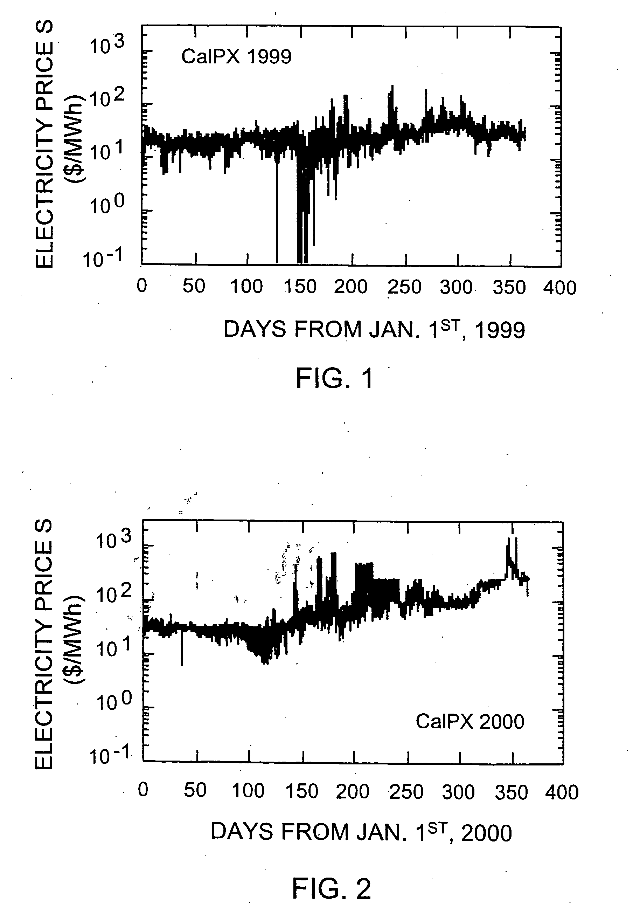

Conventional technology applied to the power exchange in California in the United States of America will be explained hereinafter. FIG. 1 shows movement of electricity prices during the year 1999 at the California Power Exchange (CalPX for short). The vertical axis is shown in logarithms. The abscissa axis shows days from January 1 of the year 1999. Electricity price fluctuations are very large as can be seen in FIG. 1.

In financial engineering technology, a volatility o defined by a formula (1) is used to express the scale of fluctuations.

$$\sigma = s/\sqrt{\tau}$$

$$s = \sqrt{\frac{1}{n-1} \sum_{i=1}^{n} \left( u_i - \overline{u} \right)^2} \quad (1)$$

$$u_i = 1\text{n}(S_i/S_{i-1})$$

Here, Si is an electricity price at time i, $u_i$ is a continuous compound interest (or a rate of return) between time i-1 and i (where a time period is defined by $\tau$).

If the unit of the time period $\tau$ is given in years, the $\sigma$ becomes volatility of per year rate. The volatility is a factor indicating the scale of the price fluctuations. In this case, the volatility is about 2300% per year. This value is two digits larger than that of ordinary stock price fluctuations. The volatility of the ordinary stock price fluctuations is less than several dozen percent.

FIG. 2 shows a movement of last close electricity prices during the year 2000 in the CalPX. The volatility of these electricity price fluctuations is about 1300% per year. The figure for this volatility is also one or two digits larger than that of stock price fluctuations.

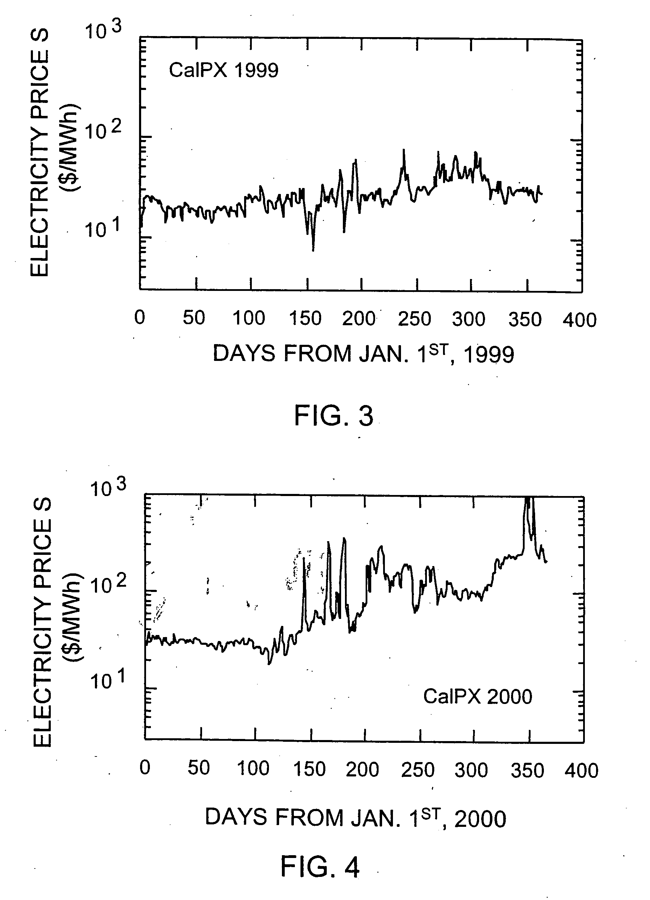

FIG. 3 shows a movement of day-average electricity prices in the CalPX for the year 1999. The volatility of fluctuations in day-average prices is about 500% per year. FIG. 4 shows a movement of day-average electricity prices in the CalPX for the year 2000. The fluctuation volatility of day-average prices is also about 500% per year. The volatility of these electricity price fluctuations are one digit larger than that of the ordinary stock price fluctuations or the like.

When conventional financial technology is applied to an underlying asset of large volatility, problems such as the following will occur. Hereinafter, Black-Scholes (BS) model is employed as a typically conventional financial technology for evaluating option prices with large volatility. The BS equation for a European-type call option is written as formula (2). The European-type option is an option that is not exercised until the expiration date.

$$c = SN(d_1) - Ke^{-r\tau}N(d_2)$$

$$d_1 = \left\{ \ln \frac{S}{K} + \left( r + \frac{\sigma^2}{2} \right) \tau \right\} \Big/ \left( \sigma \sqrt{\tau} \right)$$

$$d_2 = \left\{ \ln \frac{S}{K} + \left( r - \frac{\sigma^2}{2} \right) \tau \right\} \Big/ \left( \sigma \sqrt{\tau} \right) = d_1 - \sigma \sqrt{\tau} \qquad (2)$$

Here, c is an option price, S is a current stock price (or an electricity price), K is a strike price (the right of purchasing by K in a call option, or the right of selling by K in a put option), $\sigma$ is a volatility, $\tau$ is a period in year unit until the expiration time (or a time to maturity), and N(d) is a cumulative probability density function of a standard normal distribution.

The BS theoretical formula itself has no restriction for the value of volatility. The put option price is expressed by a following formula (3).

$$p = Ke^{-r\tau}N(-d_2) - SN(-d_1) \qquad (3)$$

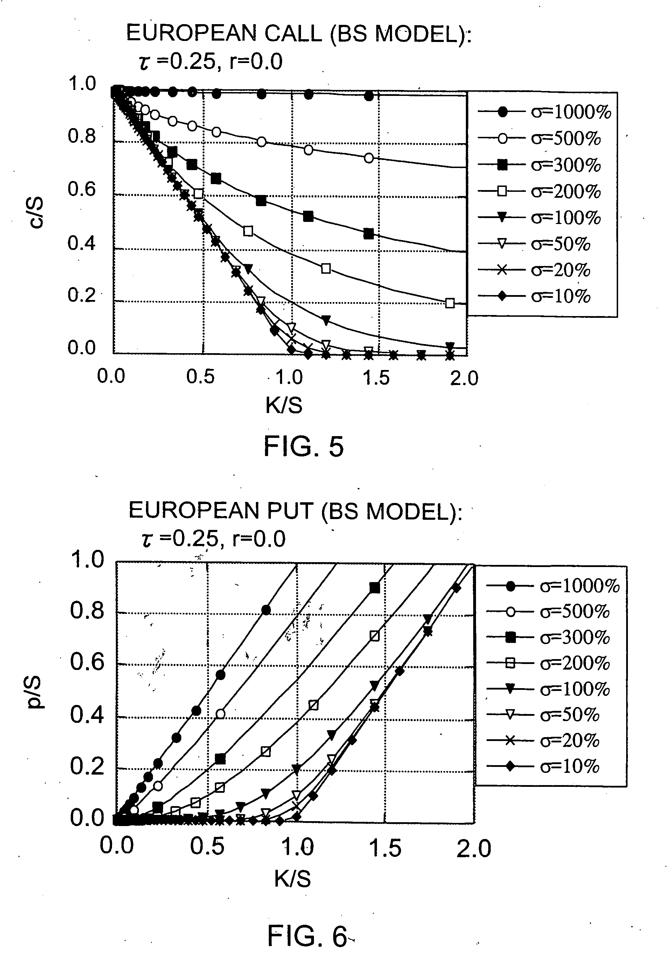

FIG. 5 shows a relationship between a European call option price c and a strike price K, wherein both prices are calculated for various volatilities $\sigma$. In FIG. 5, the option price of vertical axis and the strike price of abscissa axis are normalized by the underlying asset price S. These prices are calculated in conditions of risk-free interest rate r=0 and period $\tau$=0.25 year (or three months).

It can be seen in FIG. 5 that the option price c/S gradually approaches 1 as the volatility $\sigma$ increases. When the volatility $\sigma$ is 500% and the K/S is 1.0, the c/S reaches 0.8. This figure means that, in a case where an underlying asset price S=1000 yen and a future strike price K=1000 yen, it is necessary to pay 800 yen as a call option price c [=1000(yen)x0.8] in order to hedge price fluctuations of the underlying asset. Although the exact option price differs depending upon the period $\tau$, the price is too high to be accepted by the actual market.

In FIG. 5, it can be seen that when the volatility o rises to 1000%, the option price becomes nearly equal to the respective underlying price. This means that it is necessary to pay c=1000 yen as a premium for hedging the risk of price fluctuations of the electricity or the stock currently priced S=1000 yen. This situation is unrealistic.

FIG. 6 shows a relationship between European put option price p and strike price K calculated for various volatilities $\sigma$. In FIG. 6, the similar inclination of the put option price p can be seen as those of the call option price c shown in FIG.5.

Based upon considerations set forth hereinbefore with respect to FIGs. 5 and 6, when the volatility $\sigma$ is large, the option price c and p can be approximated as an expression (4).

$$c \sim S$$
$$p \sim K \qquad (4)$$

This expression (4) means that when, in conditions of high volatility, the BS formulae (2) and (3) for calculating the price of the derivative security are used, the option prices c and p tend to approach the underlying asset price S, and therefore, financial products of these kinds of derivatives are unrealistic. This is because that only the normal distribution is employed as the distribution of rate of return of the underlying asset.

Meanwhile, it has been recognized that the actual distribution of rate of return of the stock price deviates from the normal distribution. For this reason, in calculating option prices, there is no necessity for limiting the distribution of the rate of return of underlying asset price to the normal distribution. The calculation by the formulae (2) and (3), in some cases, results in overestimation of the actual distribution, and this inclination becomes more notable in underlying asset markets such as the electricity market.

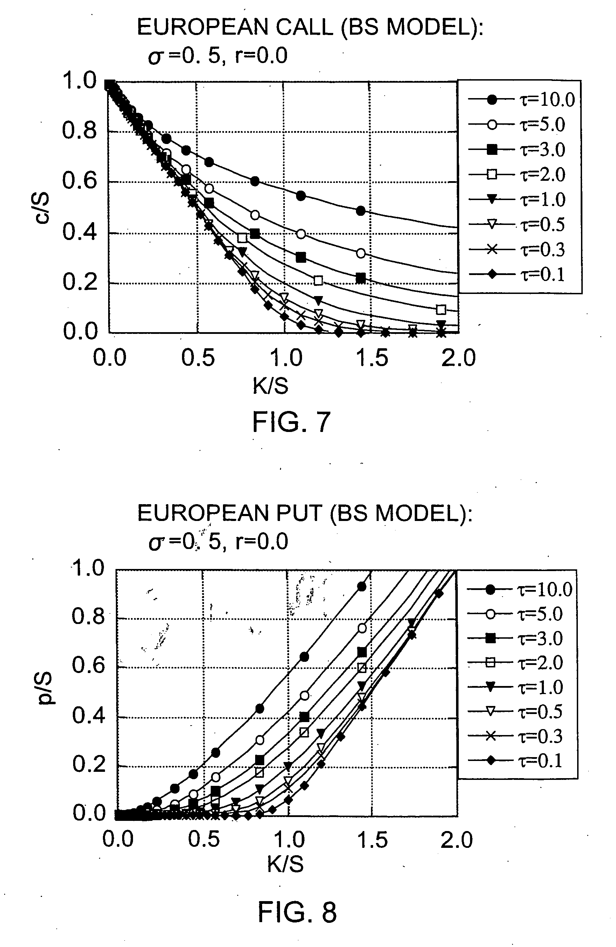

As can be seen from the formulae (2) and (3), the option price depends on the remaining period $\tau$. FIG. 7 shows European call option prices calculated on various periods $\tau$ in year unit. FIG. 8 also shows European put option prices calculated on various periods $\tau$. Here, the volatility $\sigma$ was fixed at 0.5 (=50%). In cases where the period $\tau$ is set at ten years or more, the option prices tend to exceed over the half of the respective underlying prices. These options are also unrealistic as the financial products. It should be noted that these values differ from each other depending on the volatilities. If the volatility $\sigma$ further increases, the same drawback is caused in a shorter period $\tau$.

Consequently, if we use the conventional BS price formula to evaluate option prices, in the case of a large volatility $\sigma$ or a long period $\tau$, the option prices c and p become extraordinarily high and unsuitable for the financial products. Even if high option prices are accepted, the financial facilities that have written the options, have to hedge large risk. In this case, they will manage to construct risk-free portfolio for risk-hedge by means of trading underlying assets in accordance with fluctuations of option price. This manner is so called dynamic-hedge. Nevertheless, a large deviation between the underlying asset price and the option price is inevitable.

In those crucial cases, in order to avoid their loss, the financial facilities handle the options by experientially pricing or by pricing based on actual market data. However, the pricing is not always possible if market data is insufficient. From the point of view of future return and risk-hedge, uncertainty remains because there is no secure means of replication. Especially for product assets such as electricity, some difficulties arise in stochastically computing derivative prices thereof because of regularly fluctuating components.

When power exchange is deregulated, risk of fluctuations in the electricity price (market risk) rises. This kind of risk is similar to that of fluctuations in the stock price in the stock markets. This market risk does not always return negative profit but sometimes returns positive profit. However, in rare cases, it causes returns of very large loss. Therefore, traders should properly manage the risk.

Financial technology must be effective for risk management of electricity prices as well as for risk management of stock prices and others. It is necessary to evaluate numerically a quantity of risk in order to manage the risk of electricity transactions properly. To this end, it is also necessary to model fluctuations of future electricity price. In such cases, the model of geometrical Brownian motion is usually employed in the financial technology field.

Hereinafter, the conventional financial techniques will be explained, by using the stock option pricing. A small deviation in stock price dS is described as a formula (5).

$$\frac{dS}{S} = \mu\, dt + \sigma\, dz \qquad (5)$$

Here, S is the stock price, $\mu$ is a drift rate (trend term), t is time, $\sigma$ is a volatility and z is a variable following Wiener process.

The volatility is a factor showing uncertainty of future price fluctuations and this value is used in the financial technology field to show the magnitude of a floating risk of market price. The volatility corresponds to a standard deviation calculated on a yearly basis and it is defined as the expression (1).

The Wiener process is one of Markov's stochastic processes, and it is used in physics to express a motion of micro particle, or Brownian motion, which is described by a formula (6).

$$dz = \varepsilon \sqrt{dt} \qquad (6)$$

Here, dz is an infinitesimal change of z during an infinitesimal time period dt, and also, $\varepsilon$ is a random sample from the standard normal distribution with an average of 0 and a standard deviation of 1. The infinitesimal change dz is independent on that in the other infinitesimal time period dt.

The Wiener process (the Brownian process), which has a drift term and in which a coefficient of dz is not 1 as shown in the expression (5), is so called the generalized Wiener process (or Ito process). The expression (5) also shows that logarithmic stock price moves according to Brownian motion. This kind of stochastic process is called geometrical Brownian motion. Namely, the expression (5) is used to approximate fluctuations in the logarithmic stock price by using the sum of the trend term and the random fluctuation term that fluctuate according to normal distribution. This reflects the fact that investors are interested in rates of return rather than prices themselves.

In evaluating the risk of the stock assets, usually, price fluctuations are modeled by the geometrical Brownian model, and risk evaluation is carried out according to the price distribution there-from.

For electricity prices, however, there is difficulty in accurately expressing electricity price distribution by a distribution directly derived from the geometrical Brownian motion model. Hereinafter, the stock price of last close of A Inc. in the years 2000 and 2001 are used as stock price examples; and the day-average prices of electricity of day-ahead market in the CalPX are used as electricity price examples, and drawbacks of the conventional technique will be explained.

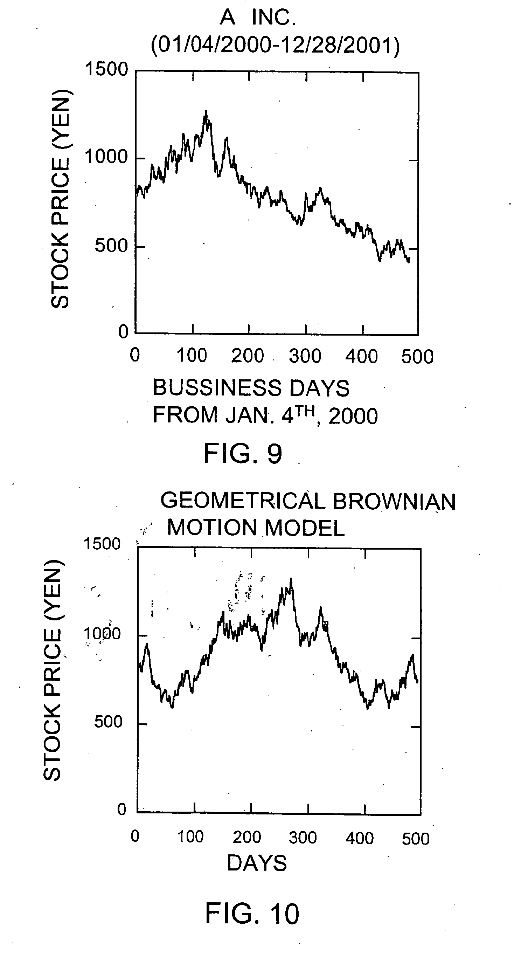

FIG. 9 shows a movement of a stock price of A Inc. The price is a last close daily stock price corresponding to the number of days counted on workday basis from January 4 in the year 2000. Volatility is about 55% in this example.

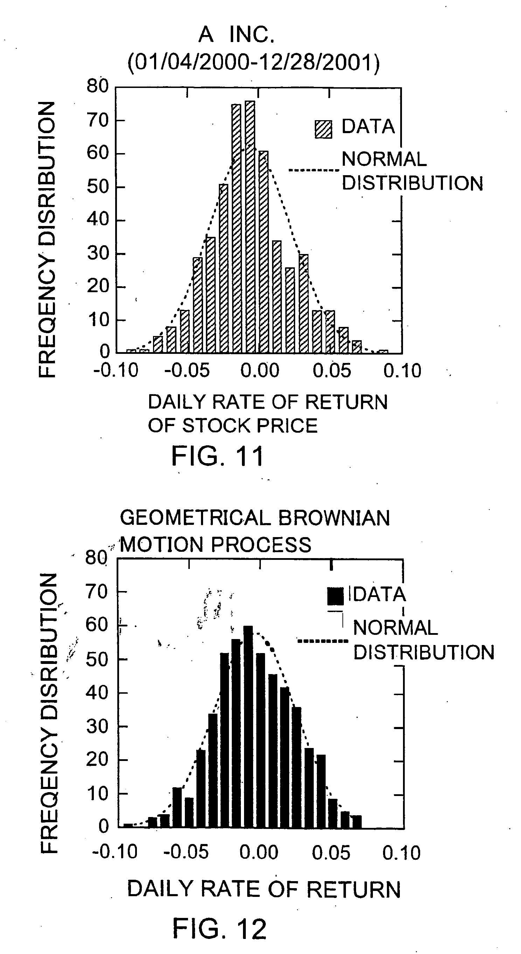

FIG. 10 shows a movement of a price generated by the geometrical Brownian motion of the formula (5). Volatility of this example is set to 55%, which is similar to that of FIG. 9. Between the curves of FIGs. 9 and 10, some values for particular days are different. Nevertheless, comparing amongst the daily rates of return, a deviation rate of the price is distributed similarly. FIGs. 11 and 12 show a frequency distribution of the daily rates of return shown in FIGs. 9 and 10. Dotted lines in the figures show a normal distribution. In both examples, it can be concluded that an approximation by the normal distribution is reasonable.

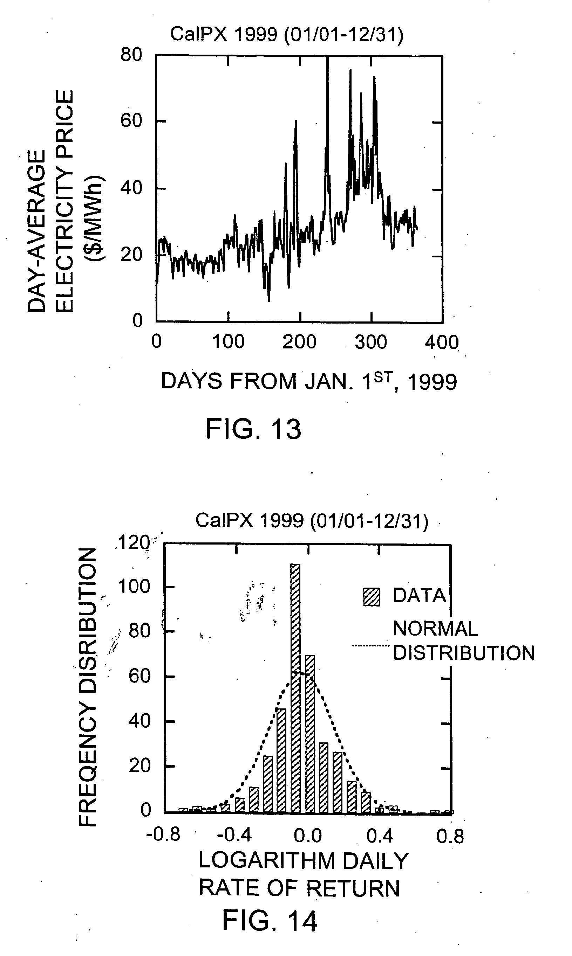

In contrast, FIG. 13 shows a movement of day-average prices of electricity of day-ahead market in the CalPX. FIG. 14 shows a frequency distribution of the daily rates of return shown in FIG. 13. In comparison of the frequency distribution and the normal distribution of dotted line, there are apparent deviations there-between. The middle portion of the frequency distribution is much sharper than that of the normal distribution. This sharpness is so called that it has a large kurtosis. The kurtosis is a quantity with respect to the fourth order moment of a probability distribution. The kurtosis of the normal distribution is 3 and the kurtosis becomes larger as the sharpness of the distribution increases. In case of FIG. 14, the kurtosis is about 6.2. As the kurtosis is large, the bottom portions of the distribution are relatively thick compared to that of normal distribution. This form of distribution is so called "fat-tail". A skewness is also employed to show a quantity with respect to a third order moment, and the skewness of a symmetrical distribution is 0.

Since values of electricity assets and risk thereof are evaluated based on a distribution of daily rates of return, calculation based on unmatched distribution causes large error in risk evaluation. Furthermore, normal distribution is generally used for price evaluation of financial derivatives such as options for hedging risk of price fluctuations. As the result, if the actual distribution of the daily rates of return differs from the normal distribution, the error becomes significant.

Accordingly, there is a drawback that a simple geometrical Brownian model cannot reproduce a price distribution such as the electricity price distribution accurately and precisely.

There have been some trials of using improved price fluctuation models for better simulations. Typical ones are a jump diffusion model and a mean reversion model. The jump diffusion model has been introduced for modeling a spike-shaped distribution of price fluctuations. (R. C. Merton, "Option Pricing When Underlying Stock Returns Are Discontinuous", J. Financial Economics, Vol.3 (1976), pp. 125.) There are difficulties in applying this jump diffusion model to risk-hedges of derivative products because prices are discontinuous. This model cannot guarantee the replication of the derivative security. It is necessary that the completeness of the market is guaranteed since replication is possible only when the completeness of market is guaranteed. To this end, a continuous price fluctuation model should be employed.

A mean reversion model has been proposed (YAMADA, Satoshi; "The financial technology for power deregulation", Toyokeizaishinpo Co., 2001). However this proposed model also cannot solve the problem set forth hereinbefore. Furthermore, the basis of the mean reversion is ambiguous and difficulty remains in setting parameters.

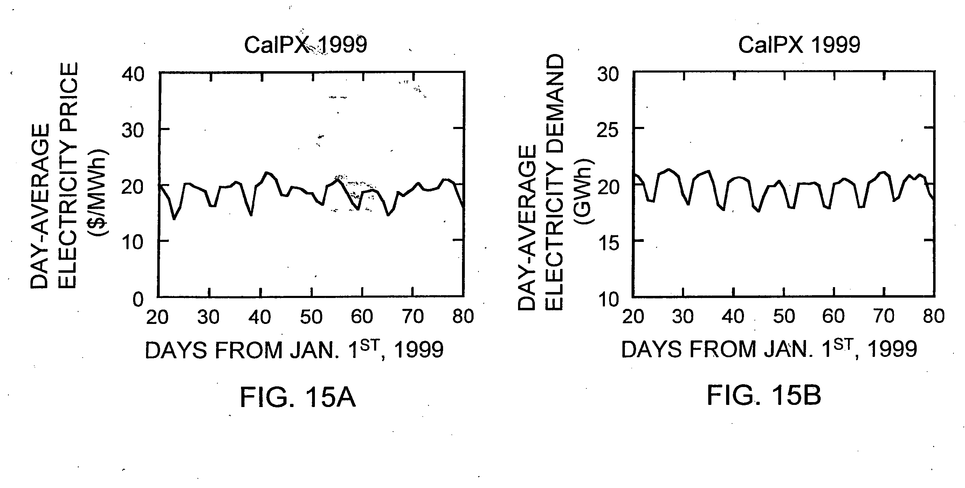

Another difficulty in modeling is that the electricity price periodically fluctuates in the markets. FIGs. 15A and 15B show movements of day-average electricity price and demand in the CalPX market. Both movements of the price and demand show weekly-periodical (7-days-period) fluctuations. The electricity price tends to decrease on weekends and holidays and to increase during weekdays.

This periodicity causes very difficult problems for financial technology. It is the key assumption for the financial technology that a future price is unpredictable and therefore, a risk-neutral price distribution can be calculated by using a stochastic method. The condition that the future price is unpredictable means that the future price should be random and an expectation value should be the same as the current value, regardless of their probability distribution. To the contrary, if periodicity exists in the price fluctuations, a future price becomes predictable to some extent. It is apparent that the periodicity of electricity price fluctuations relates to the periodicity of electricity demand fluctuations. These periodical and therefore predictable factors should be properly eliminated from data. Here, the word "properly" means "as much as possible". In conventional financial technology, the relationship between price and demand has not been taken into account. Therefore, proper treatment of this relationship between price and demand is one of obstacles for the conventional financial technology.

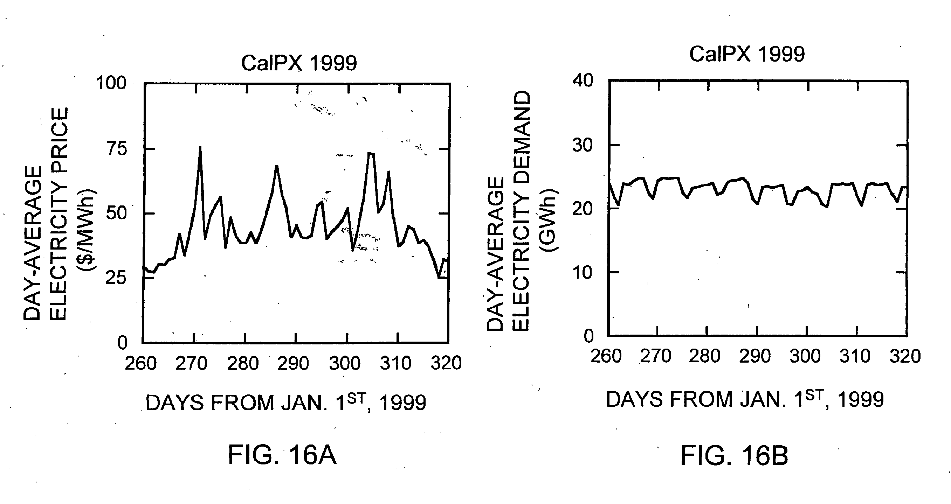

FIGs. 16A and 16B show movements in electricity price and demand at different intervals of time from those of FIGs. 15A and 15B. In FIG. 16A, the weekly periodicity in the electricity price fluctuations is unclear compared to that of FIG. 15A. As for the electricity demand shown in FIG. 16B, regardless of a large movement of the electricity price, a clear periodicity can be seen. This clear periodicity is predictable because the electricity demand is rooted in human's real social activities, and therefore, the trend of the demand is stable. The movement of electricity price may appear random, but the tendency for price to increase with increases in demand can be deduced upon detailed inspection.

The electricity price tends to fluctuate greatly and weekly periodicity thereof sometimes disappears. On the other hand, electricity demand shows relatively stable periodicity during a year. Accordingly, in a case where the relationship between the electricity price and demand is known, it is easier to eliminate seasonality and periodicity from data based on a demand fluctuation model than data based on a price fluctuation model.

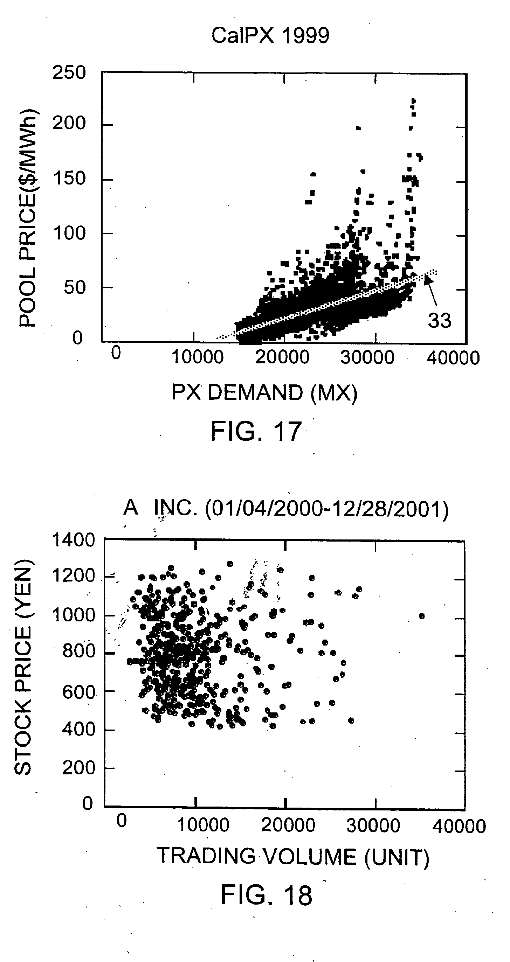

FIG. 17 shows a relationship between electricity price (POOL PRICE) and electricity demand (PX DEMAND) in the CalPX day-ahead market during the year 1999. The positive correlation between price and demand can be seen in FIG. 17. In FIG. 17, a result of linear regression is shown. A line 33 is that of least square fitting.

In the regression equation shown as follows, S is price and D is demand.

$$S[\$/MWh] = -28.3 + 0.0026 D[MW] \tag{7}$$

In this case, the correlation coefficient is 0.64.

This kind of correlation is not seen in the stock market. As for reference, FIG. 18 shows the relationship between the traded volume and last-close prices of A Inc.'s stock during the years 2000 and 2001. It is difficult to determine what factor corresponds to demand in stock trading, but if the traded volume is taken to be the demand, there is no direct correlation between the traded volume and stock prices. For this reason, it is difficult for conventional financial technology to treat the relationship between the traded volume and prices of the stock.

SUMMARY OF THE INVENTION

One object of the present invention is to provide a price evaluation system and method for a derivative security that can properly evaluate a risk of an underlying asset and reasonably price the derivative security of the asset, even if the asset has a long time to maturity or if it fluctuates at a great magnitude. The system and method, consequently, can ease the hedging of the risk of the asset and prevent users from experiencing large loss.

Another object of the present invention is to provide a price evaluation system and method for a derivative security that can evaluate a price of the derivative security by means of a stochastic process to residuals, wherein the residuals are derived by removing regularly fluctuating components from price fluctuations of an underlying asset.

Another object of the present invention is to provide a risk management system and method for a power exchange. As electricity prices fluctuate periodically, the system and method employ a new financial technology for the power exchange.

Another object of the present invention is to provide a risk management system and method for a power exchange that can provide a continuous model of electricity price fluctuations. By using the model, users can evaluate a price distribution of electricity even if the price distribution does not follow a geometrical Brownian movement, and also they can obtain its replication.

Another object of the present invention is to provide a risk management system and method for a power exchange that can evaluate a risk of power exchange by using a probability distribution very close to an actual distribution. The system and method take into account a price fluctuation model of electricity, the model is derived from a relationship between power supply or power demand and electricity price, natural climates, etc.

Another object of the present invention is to provide a risk management system and method for power exchange that can present a model inheriting features of a power transmission system.

In one aspect, the present invention provides a system and method for price evaluation of a derivative security that receives input data of a product price and a product supply or input data of a product price and a product demand during a particular trading period, or receiving input data of a stock price and a trading volume of a stock during a particular trading period. The system and method also receives input data of a time to maturity of the derivative security, a current price and a strike price of an underlying asset, and a risk-free interest rate, and further receives input data of a time interval and a number of total histories for a Monte Carlo simulation. The system and method solves a Boltzman equation by the Monte Carlo simulation, wherein the Monte Carlo simulation uses the time interval and the number of total histories, to compute a probability distribution of the product price or the stock price, computes a price of the derivative security from the probability distribution, and outputs the price of the derivative security.

In another aspect, the present invention provides a system and method for price evaluation of a derivative security that receives input data of a product price and a product supply or input data of a product price and a product demand during a particular trading period; or receives input data of a stock price and a trading volume of a stock during a particular trading period; and extracts regularly-fluctuating components from the data of the product price and the product supply or the data of the product price and the product demand, or the data of the stock price and the trading volume of the stock in order to eliminate the regularly-fluctuating components from the data. The system and method also receives input data comprising a time to maturity of the derivative security, a current price and a strike price of an underlying asset, and a risk-free interest rate, further receives input data comprising of a time interval and a number of total histories for a Monte Carlo simulation. The system and method solves a Boltzman equation by the Monte Carlo simulation, wherein the Monte Carlo simulation uses the time interval and the number of total histories to compute a probability distribution of the product price or the stock price, computes a price of the derivative security from the probability distribution, adjusts the price of the derivative security by the regularly-fluctuating components to obtain an adjusted price of the derivative security, and

outputs the adjusted price of the derivative security.

In another aspect, the present invention provides a system and method for price evaluation of a derivative security that receives input data of a product price and a product supply or input data of a product price and a product demand during a particular trading period; or receives input data of a stock price and a trading volume of a stock during a particular trading period, and extracts regularly-fluctuating components from the data of the product price and the product supply or the data of product price and the product demand, or the data of the stock price and the trading volume of the stock in order to eliminate the regularly-fluctuating components from the data. The system and method also receives input data of a time to maturity of the derivative security, a current price and a strike price of an underlying asset, and risk-free interest rate, and further receives input data of a time interval and a number of total histories for a Monte Carlo simulation. The system and method solves an equation of a Brownian motion by using the time interval and the number of total histories to compute a probability distribution of the product price or the stock price, computes a price of the derivative security from the probability distribution, adjusts the price of the derivative security by the regularly-fluctuating components to obtain an adjusted price of the derivative security, and outputs the adjusted price of the derivative security.

In another aspect, the present invention provides a risk management system and method for a power exchange that finds a model of electricity price fluctuation by taking into account a correlation between an actual electricity price and parameters related to the actual electricity price itself, computes a probability distribution of electricity price fluctuations against irregular fluctuations of the parameters based on the model of electricity price fluctuations, and evaluates a risk of the electricity price by using the probability distribution of the electricity price fluctuations.

In another aspect, the present invention provides a risk management system and method for a power exchange that derives periodically fluctuating components and randomly fluctuating components from historical parameters, which parameters affect electricity price fluctuations, evaluates periodically fluctuating components and randomly fluctuating components of a historical electricity price by using the periodically fluctuating components and the randomly fluctuating components of the historical parameters, and measures a market risk of electricity price fluctuations, based on the periodically fluctuating components and the randomly fluctuating components of the historical electricity price.

In another aspect, the present invention provides a risk management system and method for a power exchange that derives a relationship between a power supply or demand and an electricity price from data of historical power supply or power demand and data of historical electricity price, evaluates, by using the relationship, a probability distribution of electricity price fluctuations related to uncertain fluctuations of power supply or power demand in a given period for evaluation of a market risk, and measures a market risk of electricity price by using the probability distribution of electricity price fluctuations.

In another aspect, the present invention provides a risk management method for power exchange that extracts historical regularly- or periodically-fluctuating components, which regularly or periodically fluctuates depending on conditions of season, time of day, day of the week or weather, and historical randomly-fluctuating components from historical power demand data. The method estimates future regularly- or periodically-fluctuating components of power demand from the historical regularly- or periodically-fluctuating components in similar conditions to the conditions in which the historical components are extracted, also estimates future fluctuations of power demand based on the future regularly- or periodically fluctuating components, adapts a given demand-price relationship of electricity to the future fluctuation of power demand to deduce future fluctuations in electricity price, and measures a quantity of risk by using the future fluctuations of the electricity price.

In another aspect, the present invention provides a risk management method for a power exchange, wherein plural power exchanges based on plural power supplies and power demands are carried out, that derives respective relationships between power supplies or power demands and electricity prices from data of historical power supplies or power demands and data of historical electricity prices for the respective electricity transactions, and evaluates, by using the respective relationships, respective probability distributions of electricity price fluctuations related to uncertain fluctuations in the power supply or power demand in a given period for evaluation of a market risk, and measures the market risk of electricity price by using the respective probability distributions of the electricity price fluctuations for a comprehensive risk evaluation of the electricity price fluctuations.

In another aspect, the present invention provides a risk management method for a power exchange, wherein plural power exchanges based on plural power supplies and power demands are carried out, that derive respective relationships between power supplies or power demands and electricity prices from data of historical power supplies or power demands and data of historical electricity prices for the respective power exchanges, and evaluate, by using the respective relationships, respective probability distributions of electricity price fluctuations related to uncertain fluctuations in the power supplies or power demands in a given period for evaluation of market risk. The method measures the market risk of electricity prices by using the respective probability distributions of electricity price fluctuations, derives a probability distribution for a randomly fluctuating components by a Monte Carlo simulation, and evaluates a market risk of the electricity price fluctuations.

BRIEF DISCRIPTION OF THE DRAWINGS

FIG. 1 is a graph showing a movement of electricity prices during the year 1999 in the California Power Exchange (CalPX).

FIG. 2 is a graph showing a movement of electricity prices during the year 2000 in the CalPX.

FIG. 3 is a graph showing a movement of day-average electricity prices in the CalPX of the year 1999.

FIG. 4 is a graph showing a movement of day-average electricity prices in the CalPX of the year 2000.

FIG. 5 is a graph showing a relationship between European call option price c and strike price K, wherein both prices are computed for various volatilities $\sigma$ by a conventional Black-Scholes model.

FIG. 6 is a graph showing a relationship between European put option price p and strike price K, wherein both prices are computed for various volatilities $\sigma$ by the conventional Black-Scholes model.

FIG. 7 is a graph showing a relationship between European call option price c and strike price K computed on various periods $\tau$ by the conventional Black-Scholes model.

FIG. 8 is a graph showing a relationship between European put option price p and strike price K computed on various periods $\tau$ by the conventional Black-Scholes model.

FIG. 9 is a graph showing a movement of stock prices of A Inc.

FIG. 10 is a graph showing a movement of prices generated by a geometrical Brownian motion model.

FIG. 11 is a graph showing a distribution of daily rates of return of A Inc.

FIG. 12 is a graph showing a distribution of daily rates of return computed by the geometrical Brownian motion model.

FIG. 13 is a graph showing a movement of day-average electricity prices of day-ahead market in the CalPX of the year 1999.

FIG. 14 is a graph showing a frequency distribution of daily rates of return of electricity prices in the CalPX of the year 1999.

FIG. 15A is a graph showing a movement of day-average electricity prices in the CalPX market (First half of the year 1999).

FIG. 15B is a graph showing a movement of day-average electricity demands in the CalPX market (First half of the year 1999).

FIG. 16A is a graph showing a movement of day-average electricity prices in the CalPX market (Last half of the year 1999).

FIG. 16B is a graph showing a movement of day-average electricity demands in the CalPX market (Last half of the year 1999).

FIG. 17 is a graph showing a relationship between electricity price and electricity demand of day-ahead market in the CalPX of the year 1999.

FIG. 18 is a graph showing a relationship between traded volume and last-close stock price of A Inc. in the years 2000 and 2001.

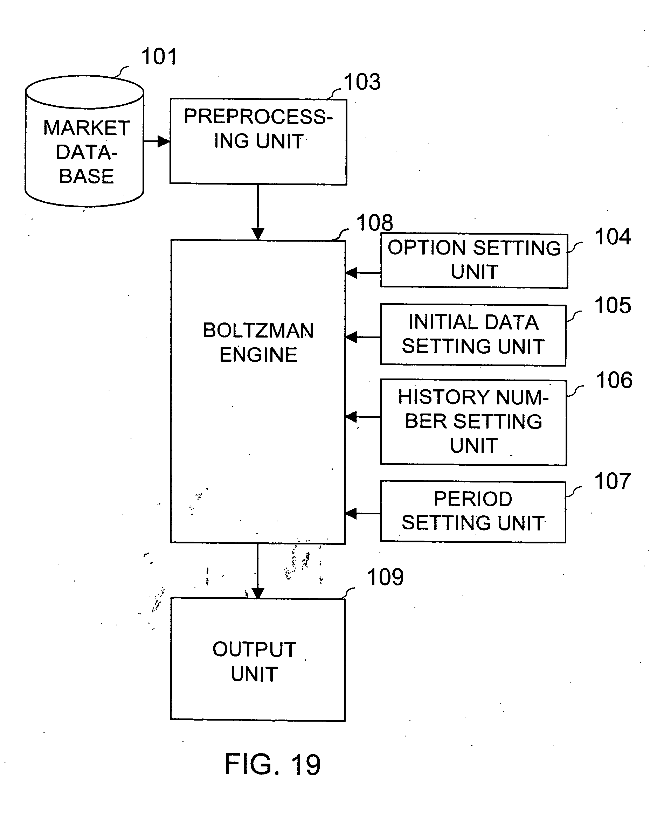

FIG. 19 is a block diagram showing a price evaluation system of a first embodiment of the present invention.

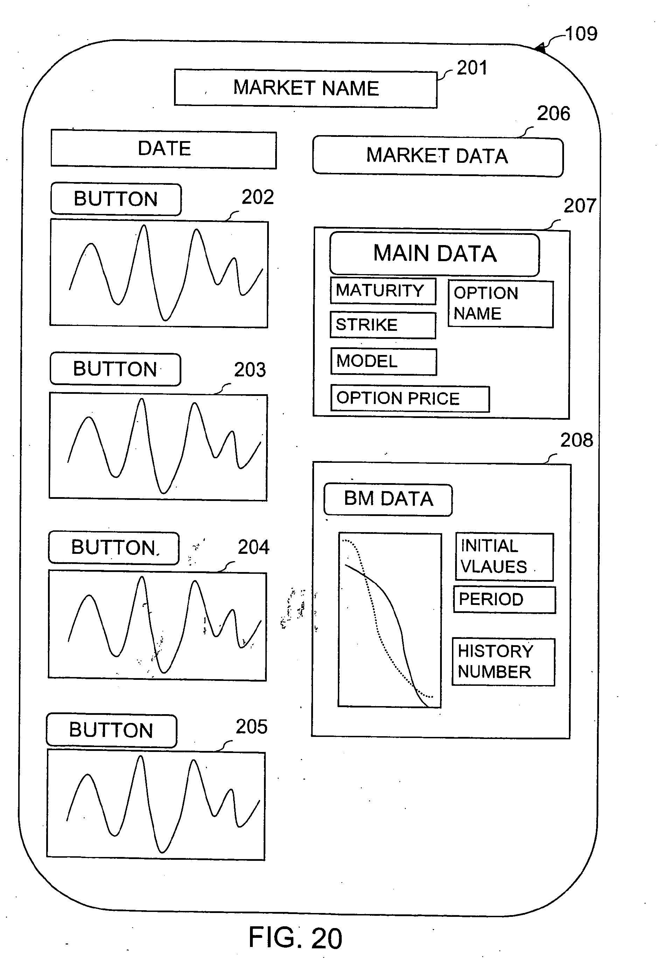

FIG. 20 is an illustration of a screen displayed by the price evaluation system of FIG. 19.

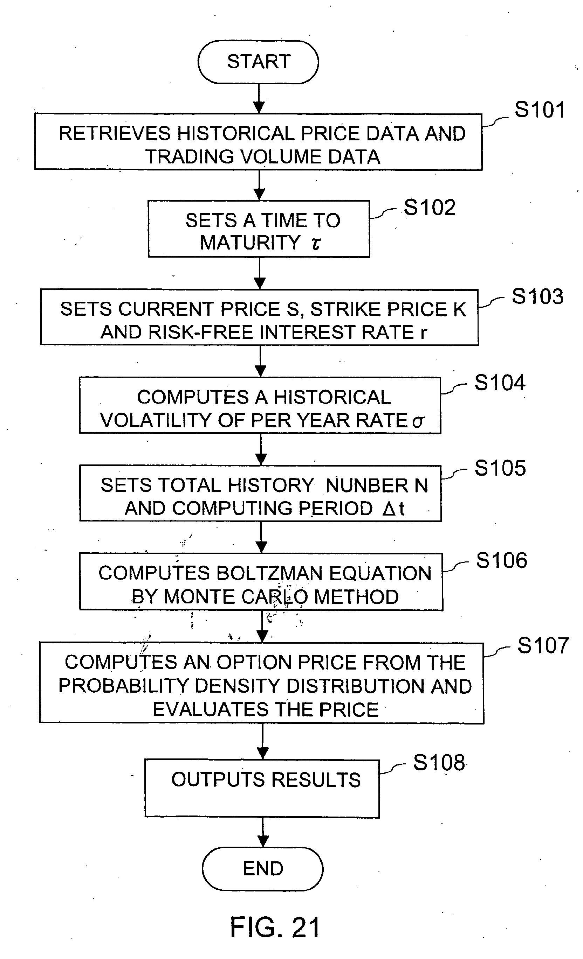

FIG. 21 is a flowchart illustrating a price evaluation process, which is carried out by the price evaluation system of FIG. 19.

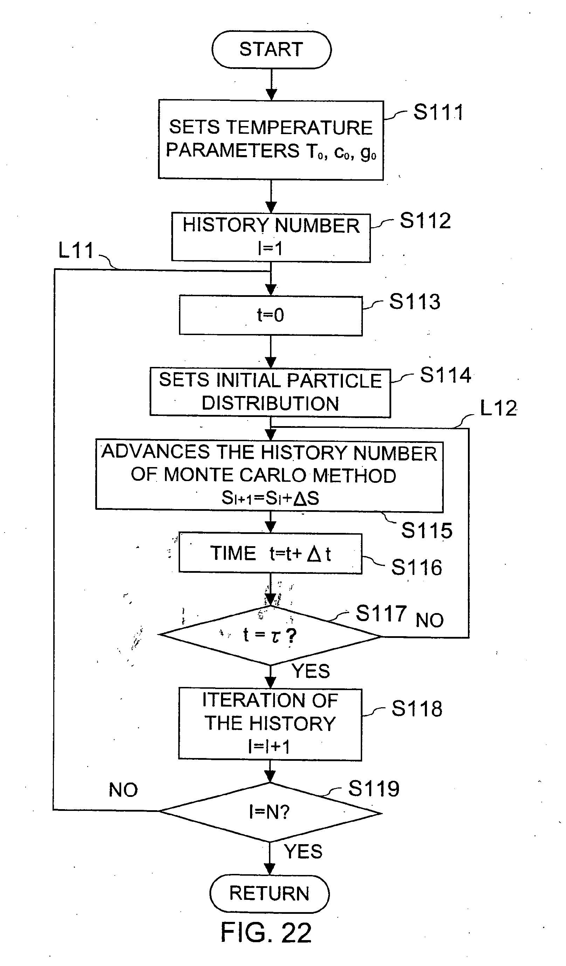

FIG. 22 is a flowchart illustrating a Monte Carlo method, which is carried out in a Boltzman engine of the price evaluation system of FIG. 19.

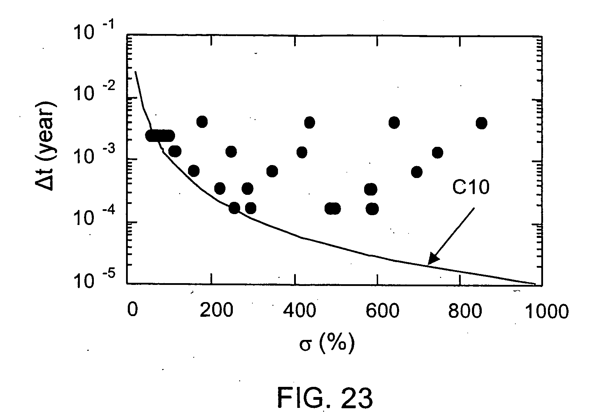

FIG. 23 is a graph showing a relationship between time meshes $\Delta t$ used in the Monte Carlo method and volatilities $\sigma$.

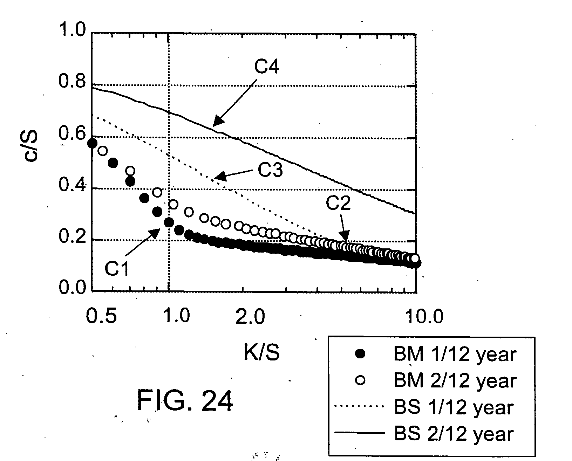

FIG. 24 is a graph showing European call option prices computed by the price evaluation system of FIG. 19 of the present invention and those of computed by the conventional Black-Scholes model.

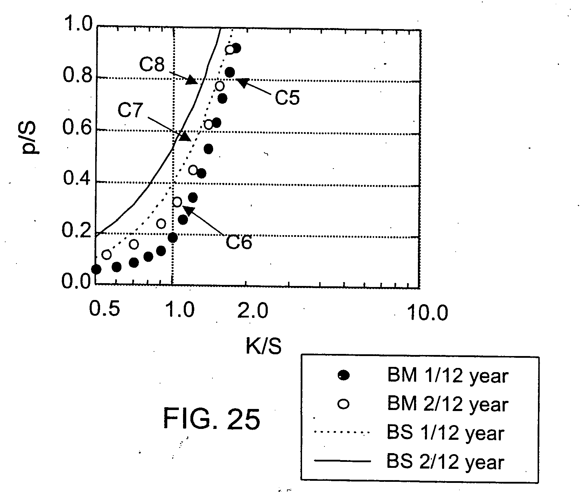

FIG. 25 is a graph showing European put option prices computed by the price evaluation system of FIG. 19 of the present invention and those of computed by the conventional Black-Scholes model.

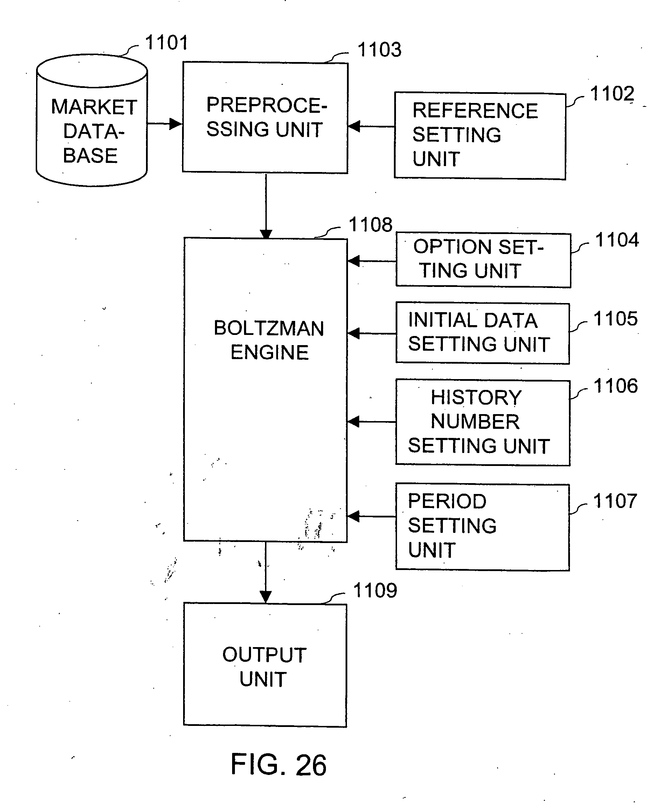

FIG. 26 is a block diagram showing a price evaluation system of a second embodiment of the present invention.

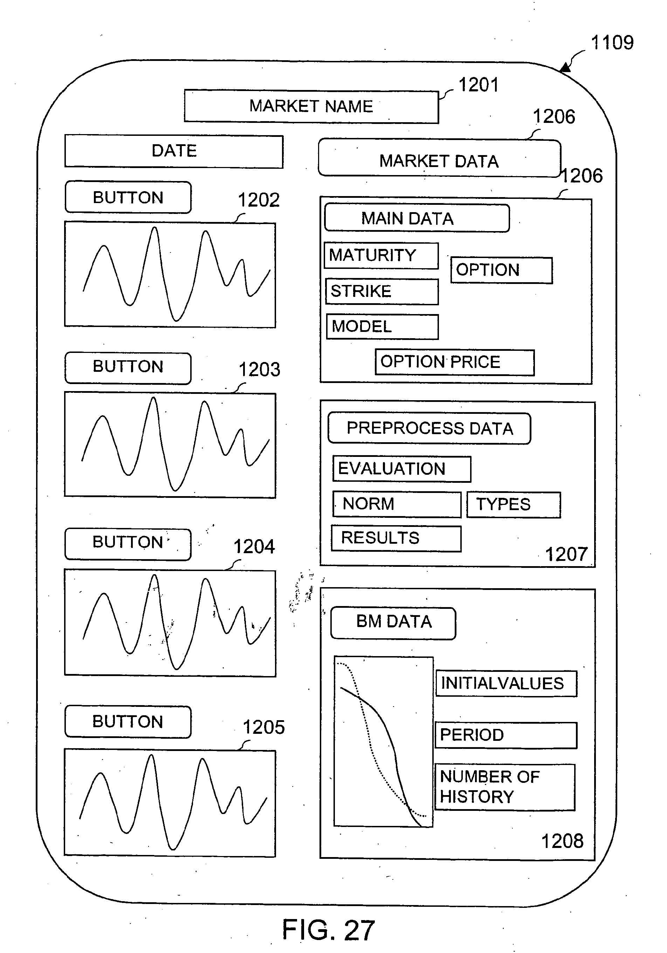

FIG. 27 is an illustration of a screen displayed by the price evaluation system of FIG. 26.

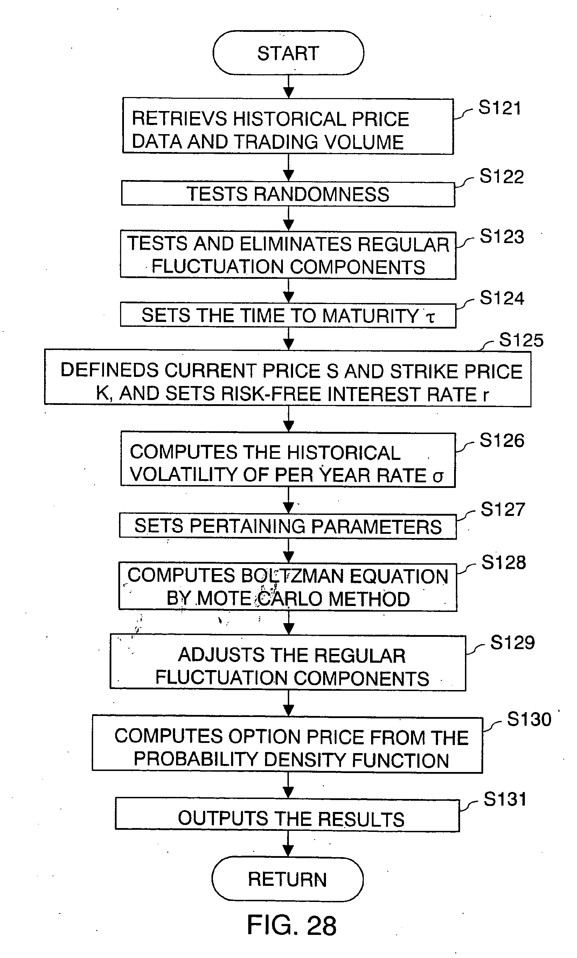

FIG. 28 is a flowchart illustrating a price evaluation process, which is carried out by the price evaluation system of FIG. 26.

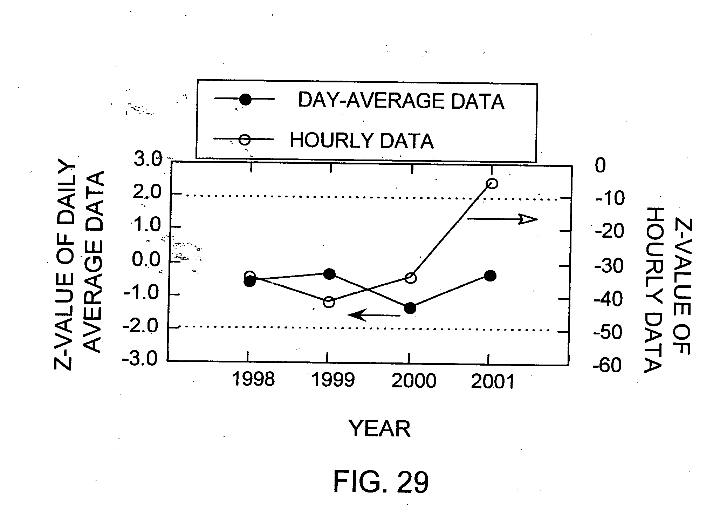

FIG. 29 is a graph showing results of a randomness test applied to the electricity price of day-ahead market in the CalPX of the years 1998~2001 (For day-average data and hourly data).

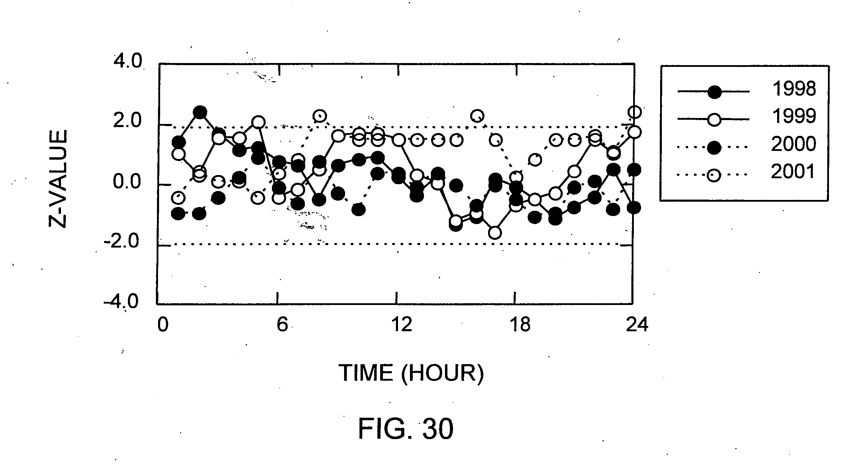

FIG. 30 is a graph showing results of a randomness test applied to the electricity price of day-ahead market in the CalPX in the years 1998~2001 (For data of several particular times of each day).

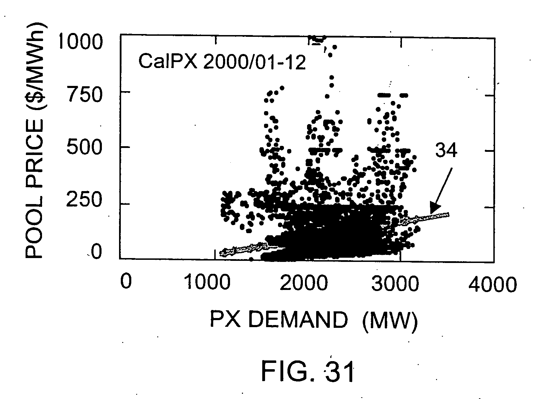

FIG. 31 is a graph showing a relationship between electricity prices and electricity demands of day-ahead market in the CalPX of the year 2000.

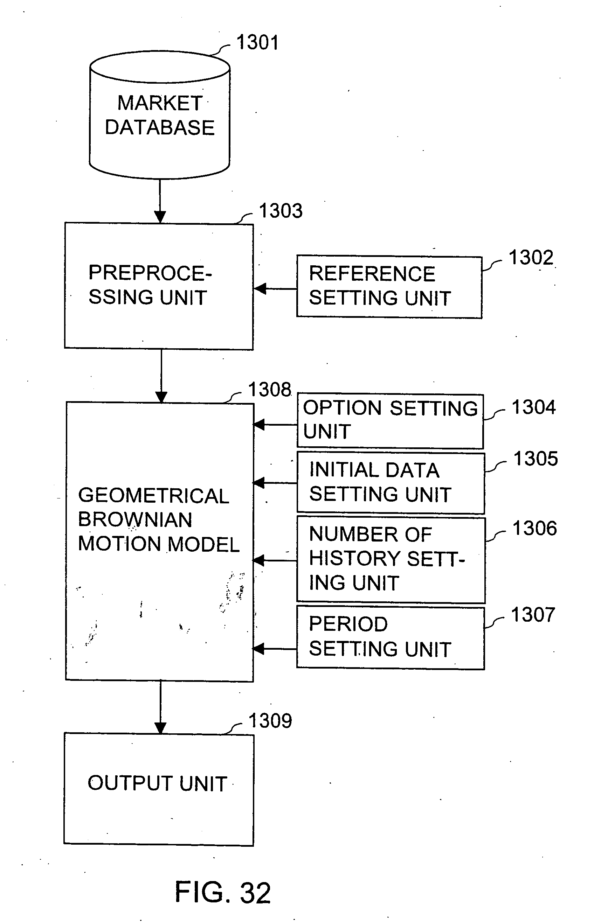

FIG. 32 is a block diagram showing a price evaluation system of a third embodiment of the present invention.

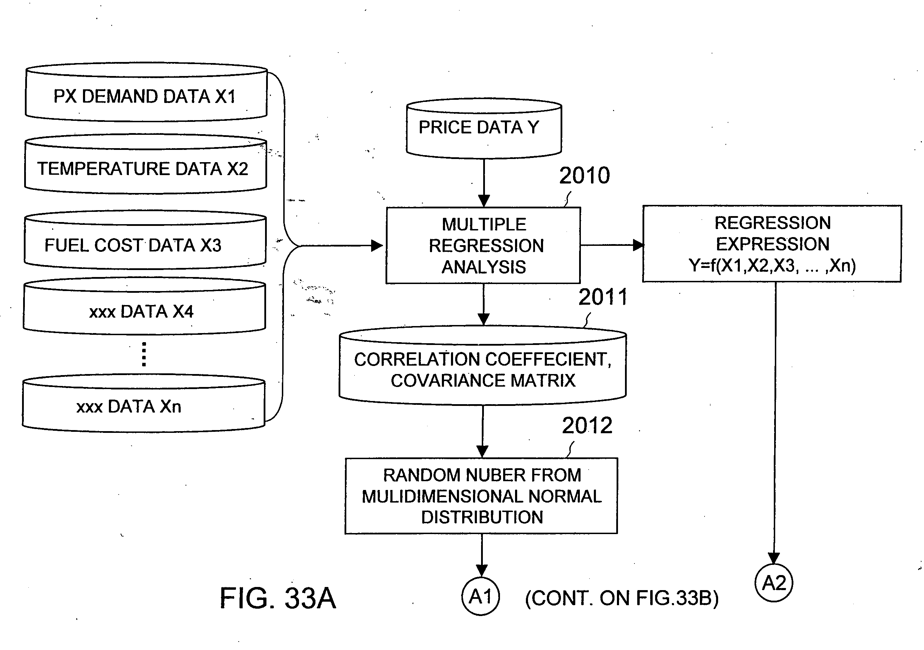

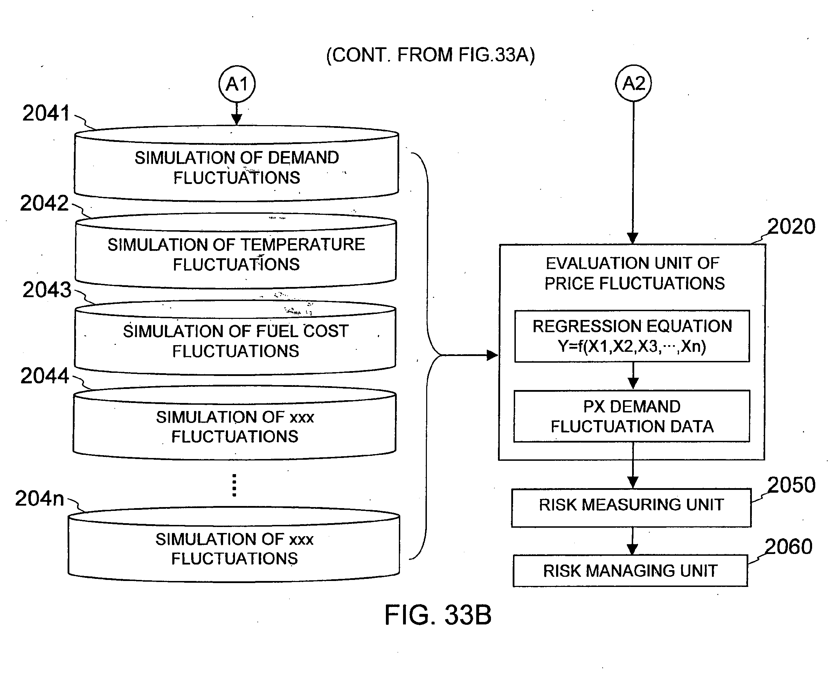

FIG. 33 (FIGs. 33A and 33B) is a block diagram showing a risk management system for a power exchange of a fourth embodiment of the present invention.

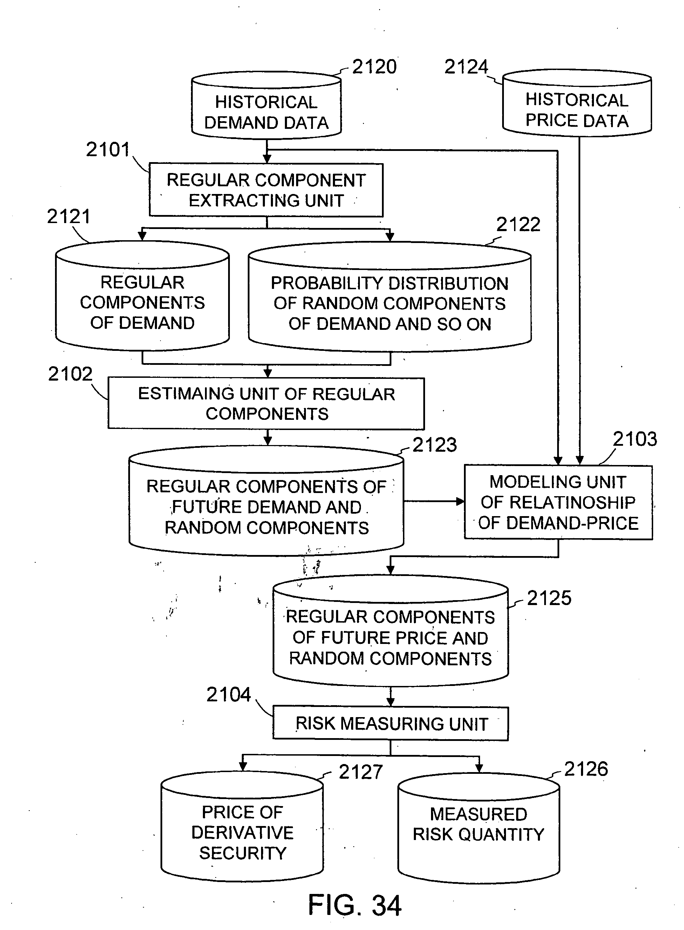

FIG. 34 is a block diagram showing a risk management system for a power exchange of a fifth embodiment of the present invention.

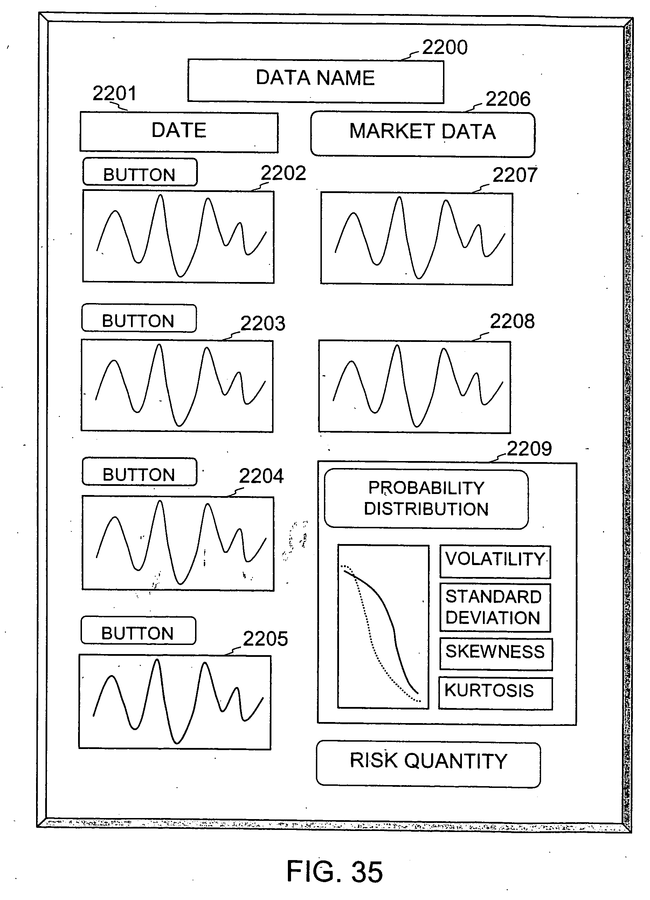

FIG. 35 is an illustration of a screen displayed by the risk management system for the power exchange of FIG. 34.

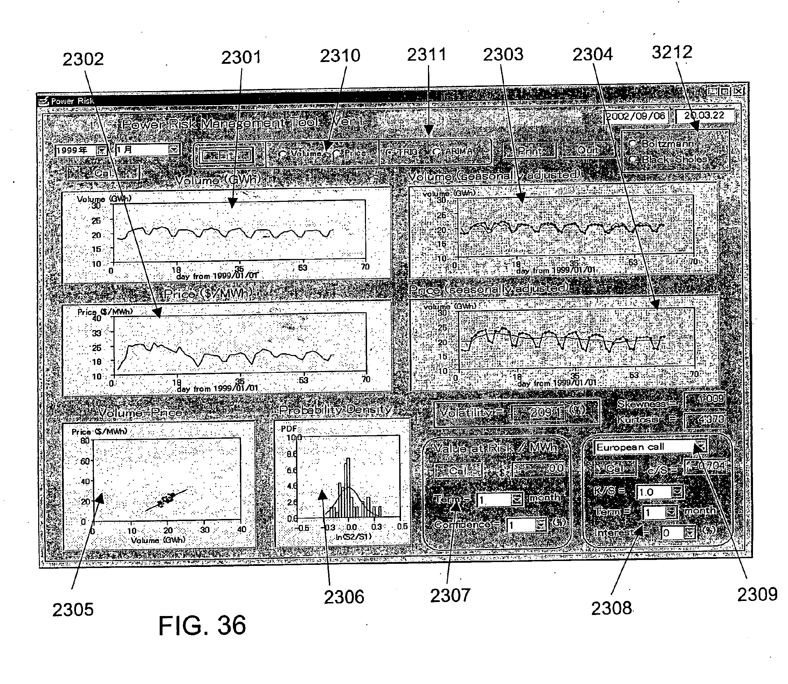

FIG. 36 is a screen copy copied from the risk management system for the power exchange of FIG. 34.

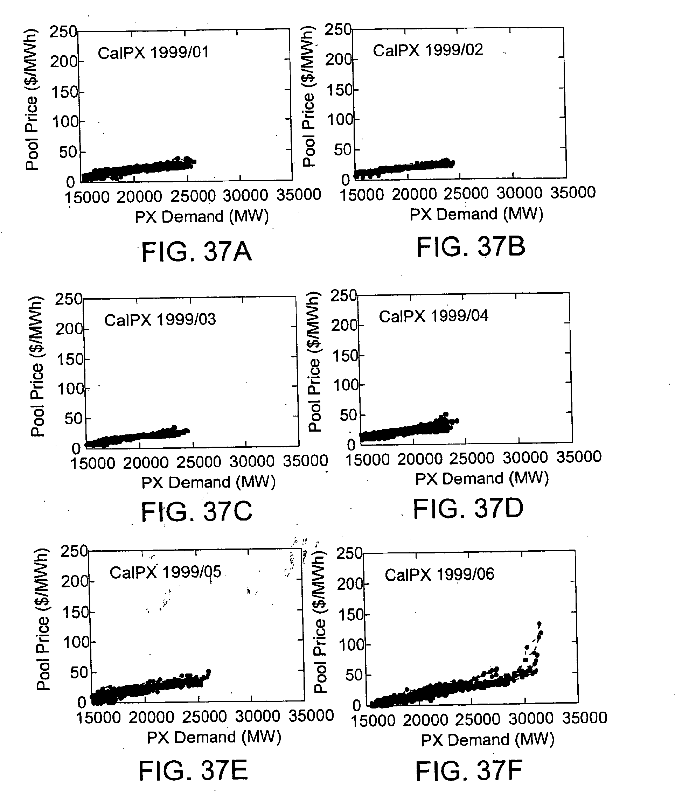

FIG. 37 (FIGs. 37A~37F) is a graph showing relationships between electricity prices and electricity demands in the CalPX in each month of the year 1999 (First half of the year).

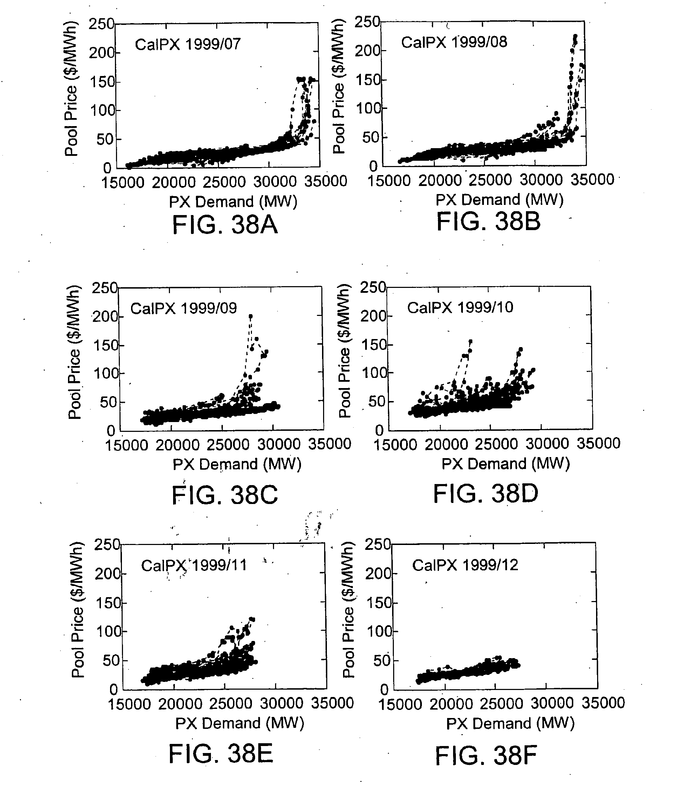

FIG. 38 (FIGs. 38A~38F) is a graph showing relationships between electricity prices and electricity demands in the CalPX in each month of the year 1999 (Last half of the year).

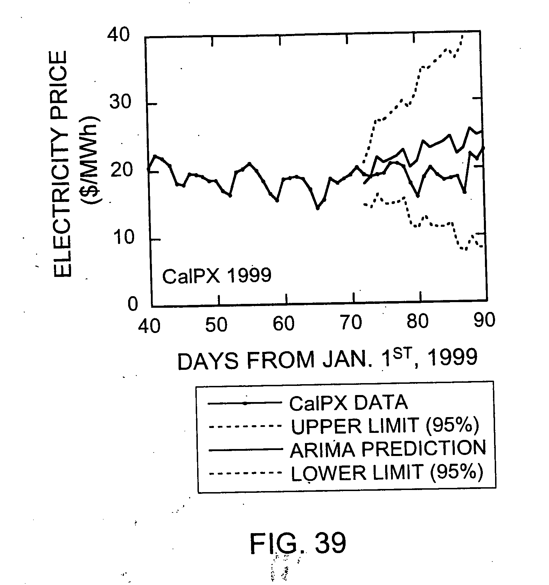

FIG. 39 is a graph showing a movement of day-average electricity prices in the CalPX and an estimated future movement of electricity prices after seasonal adjustment.

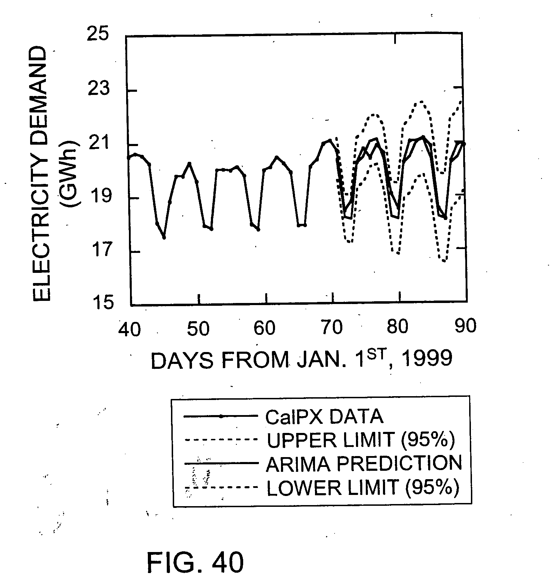

FIG. 40 is a graph showing a movement of day-average electricity demands in the CalPX and an estimated future movement of electricity demands after seasonal adjustment.

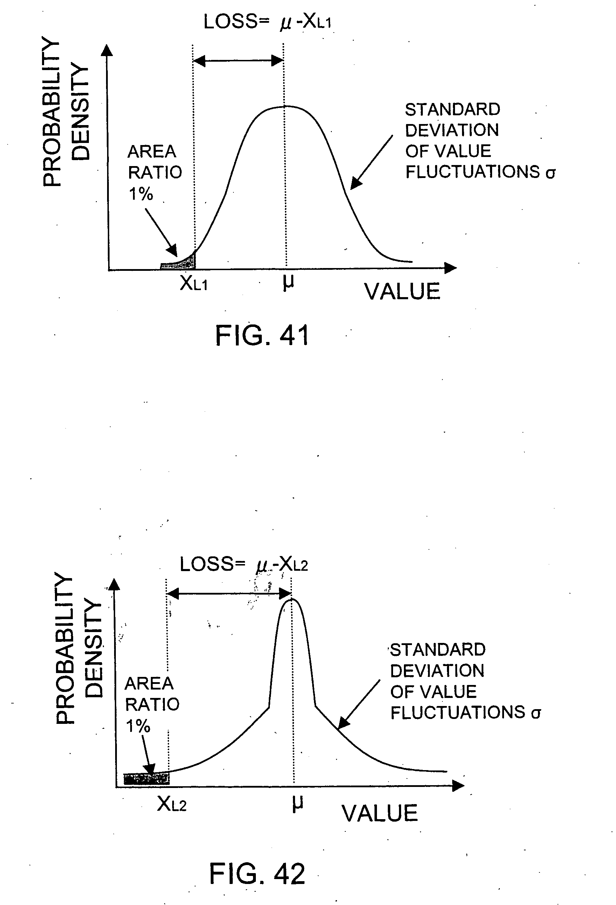

FIG. 41 is a graph showing a relationship between asset values and probability densities of an asset that has an average value $\mu$ and fluctuates on a normal distribution of a standard deviation $\sigma$.

FIG. 42 is a graph showing a relationship between asset values and probability densities of an asset that has an average value $\mu$ and fluctuates on a fat-tail distribution.

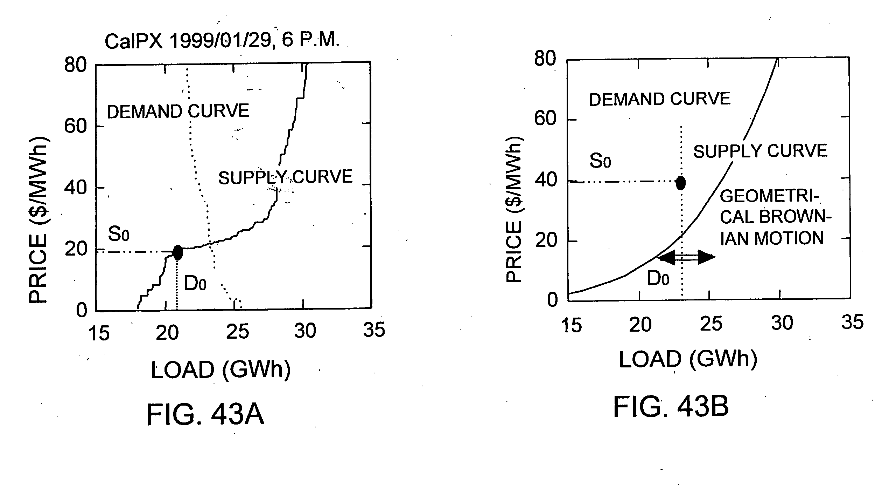

FIG. 43A is a graph showing an actual supply curve and an actual demand curve of electricity of six p.m. on January 29 in the year 1999 in the CalPX.

FIG. 43B is a graph showing a simplified supply curve and demand curve of electricity of six p.m. on January 29 in the year 1999 in the CalPX.

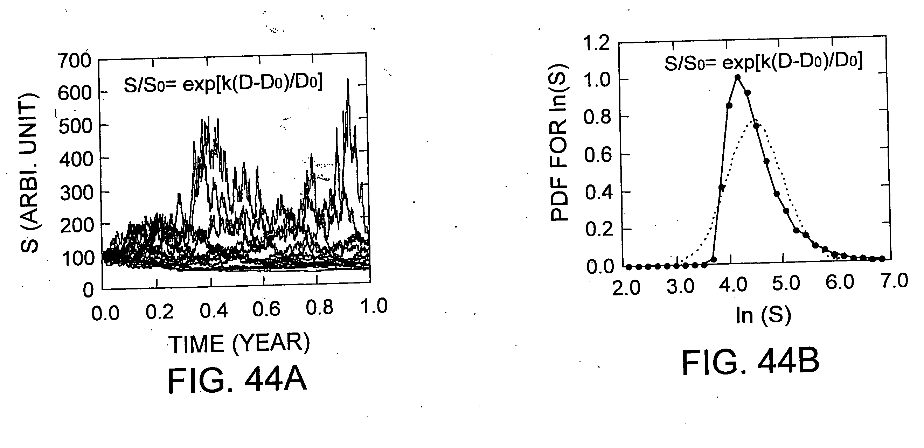

FIG. 44A is a graph showing electricity price fluctuations computed by the Monte Carlo operation.

FIG. 44B is a graph showing a distribution of logarithmic electricity price derived from the price fluctuations by means of the Monte Carlo method.

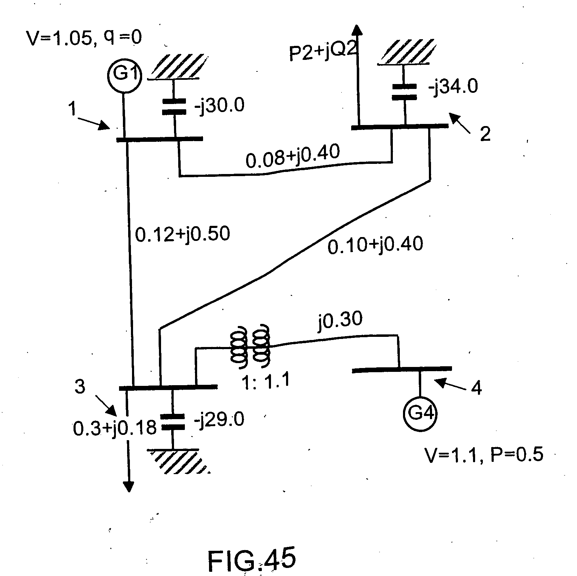

FIG. 45 is a simplified circuitry of a power supply system.

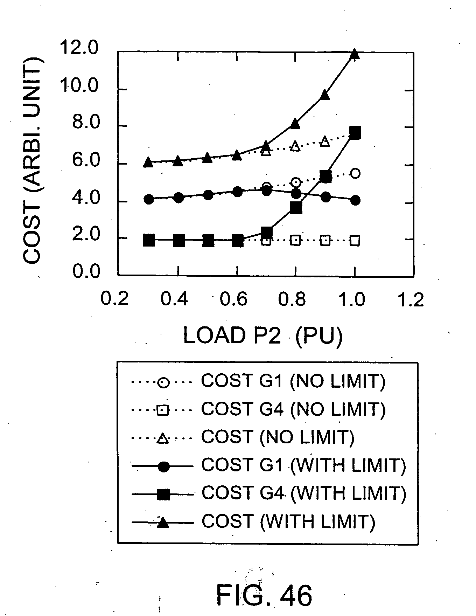

FIG. 46 is a graph showing relationships between power demands and power costs.

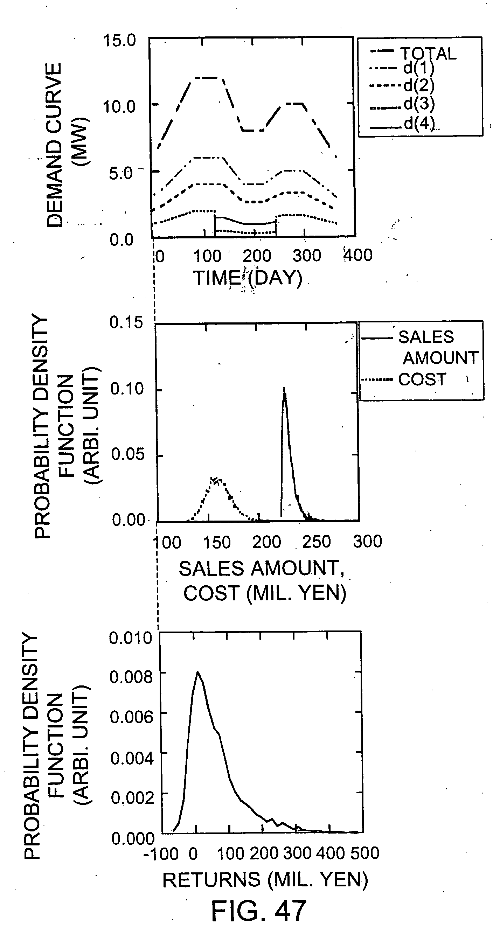

FIG. 47 is a graph showing power demand curves of various demand patterns, probability density functions to power sales and power costs, and probability density functions to returns, all of which were derived by the Monte Carlo method.

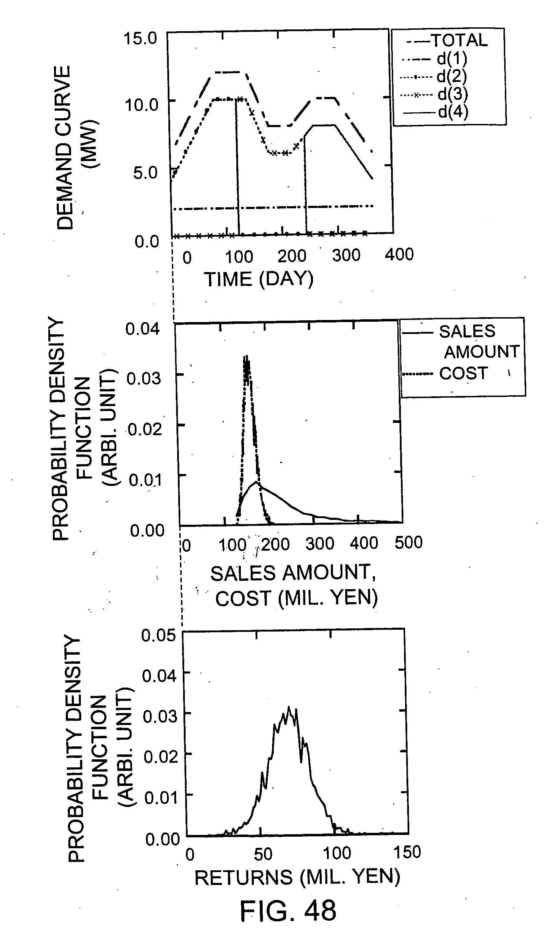

FIG. 48 is a graph showing another power demand curves of various demand patterns, probability density functions to power sales and power costs, and probability density functions to returns, all of which are derived by the Monte Carlo method.

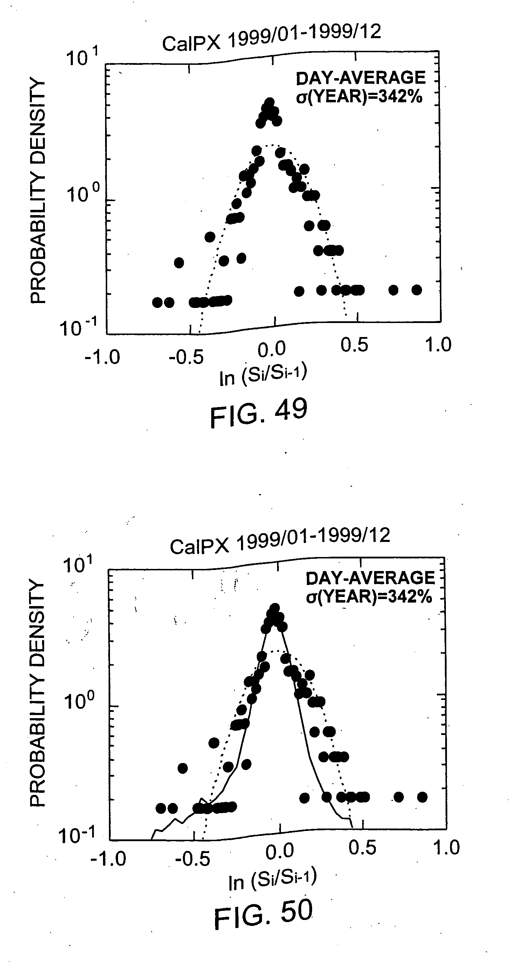

FIG. 49 is a graph showing a distribution of an exponential daily rates of return $\ln(S_i/S_{i-1})$, which is computed for day-average electricity prices in the CalPX.

FIG. 50 is a graph showing a distribution of an exponential daily rates of return $\ln(S_i/S_{i-1})$, where the electricity prices were computed by the financial Boltzman model.

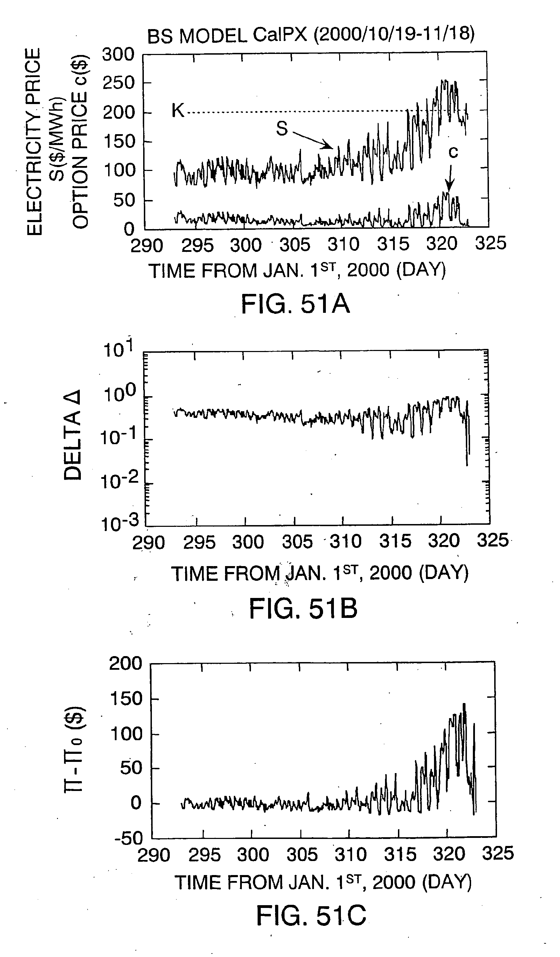

FIG. 51A is a graph showing an electricity price and an option price obtained by a dynamical hedge by the Black-Scholes model.

FIG. 51B is a graph showing $\Delta$ (delta) obtained by the dynamical-hedge by the Black-Scholes model.

FIG. 51C is a graph showing a portfolio obtained by the dynamical-hedge by the Black-Scholes model.

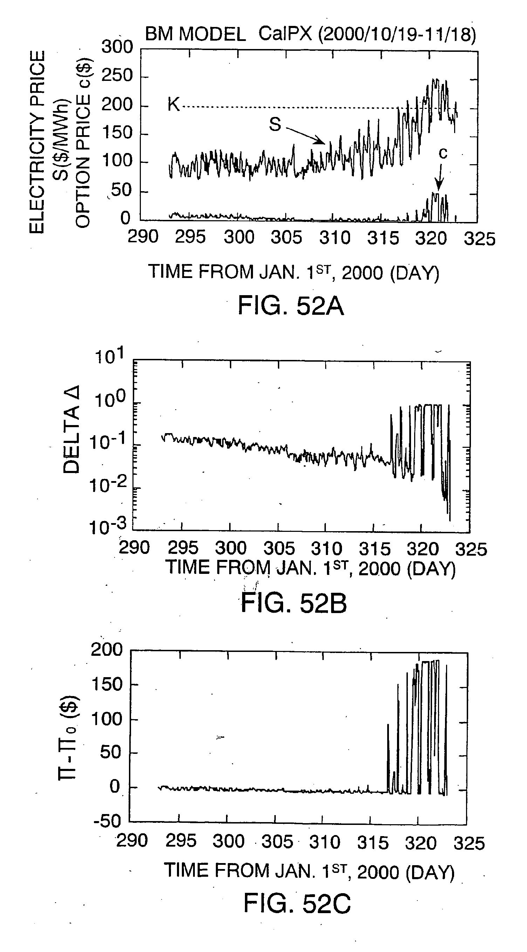

FIG. 52A is a graph showing an electricity price and an option price obtained by a dynamical hedge by the financial Boltzman model.

FIG. 52B is a graph showing $\Delta$ (delta) obtained by the dynamical-hedge by the financial Boltzman model.

FIG. 52C is a graph showing a portfolio obtained by the dynamical-hedge by the financial Boltzman model.

## DETAILED DESCRIPTION OF THE PREFERED EMBODIMENTS

The preferred embodiments in accordance with the present invention will be explained hereinafter with reference to drawings. Although the embodiments are to be realized in a stand-alone computer system or a network computer system, hereinafter, the embodiments will be explained by using functional units for explanatory simplicity.

<First Embodiment>

FIG. 19 shows a price evaluation system for a derivative security as a first embodiment of the present invention. A market database 101 stores various and actual market data. A preprocessing unit 102 retrieves necessary market data from the market database 101 and carries out a necessary preprocess. The necessary market data are such as stock price of a specific product, its demand and trading volume. A Boltzman engine 108 inputs a type of option, a time to maturity of the option, a present price, a strike price, a risk-free interest rate and other necessary data from an option data setting unit 104; initial data from an initial data setting unit 105; a total history number from a total history number setting unit 106; and a period of computation from a period setting unit 107. The initial data from the initial data unit 105 includes temperature parameters T0, c0 and g0, and an initial particle distribution. By using preprocessed market data from the preprocessing unit 103 and this data from the units 104, 105, 106 and 107, and by using a Monte Carlo method, the Boltzman engine 108 computes a financial Boltzman equation to obtain a probability density function of a target derivative security, and further derives an option price of the derivative security from the probability density function.

The Boltzman engine 108 is a unit presented in a thesis "Yuji Uenohara and Ritsuo Yoshioka, Boltzman Model in Financial Technology, Proc. of 5th International Conference of JAFEE, August 28, 1999, Japan, pp. 18-37". The Boltzman engine is also presented in a Japanese Patent Publication JP2002-32564A, "Dealing System and Record Media". This Boltzman engine 108 operates in a manner explained later.

An output unit 109 can display computation results from the Boltzman engine 108 on a screen as shown in FIG. 20 and print out the results when required.

In an illustration of the screen shown in FIG. 20, a box 201 displays a market name currently selected. This box 201 has a pull-down menu of a list of markets that are currently open. A user can select any market from the list. Small windows 202-205 display movements of various market data, respectively. Such as price data, demand data, trading volume data, and trade position data (current clearing price data) are displayed, respectively. These data types are selectable by buttons attached adjacent to respective small windows 202-205. A small window 206 displays important data indicating conditions of the market, such as an interest rate, an exchange rate, an indicative price and a change in electricity price from the preceding day. In a small window 207, important parameters directly related to transactions of a derivative security are inputted. Kinds of option to be inputted are not only the European call option and put option, but also Asian options, barrier options and other various options. The Asian options are average rate options, which treat average price as an underlying asset. The barrier options define an actual timing of options.

Various data necessary for a financial Boltzman model are inputted from a small window 208. The data to be inputted are various initial setting values, period of computation, a number of histories, and other necessary parameters. In this small window 208, a graph which compares a distribution curve of a rate of return derived by the Boltzman model (the continuous line as shown in FIG. 20) with a distribution curve thereof by the conventional method of using the normal distribution (the dotted line therein) is also displayed. In this system, the suitable parameters for the Boltzman model are preliminarily provided therein and these values are displayed as recommended values. Therefore, usually, the user can use these default values, and, only in a special case, the user can input more suitable values from this small window 208.

The default values of the parameters for the Boltzman model are defined in accordance with the market data by a system administrator. For an example of the parameter T0,

$$T_0 = \sigma / \sqrt{6T} \tag{8}$$

is used. Here, o is a volatility of % per year rate of an underlying asset, and T is a number of business days in a year, i.e. 365 days. As for c0 and g0, in a case where a distribution of daily rates of return of the underlying asset is close to a normal distribution, the settings c0=0 and g0=0 are acceptable. In contrast, in a case where the distribution of daily rates of return of the underlying asset is far from the normal distribution, c0 and g0 should be set to more proper values. In the latter case, c0=0 is acceptable, but comparatively large value should be set for g0. The value of g0 differs depending on the volatility of the underlying asset and the parameter T0. For instance, when $\sigma$=100%, T0=0.003 and g0=3900 are suitable, and when $\sigma$=200%, then T0=0.004 and g0=3100 are suitable. In a real operation, starting from these values fine adjustments will be carried out.

FIGs. 21 and 22 are flowcharts illustrating operations carried out by this price evaluation system for derivative security. In order to evaluate a price of a derivative security by the present price evaluation system for derivative security, first, the preprocessing unit 103 retrieves the historical price data and trading volume (or historical demand value or supply value) data from the market database 103(step S101). The time to maturity of the derivative security $\tau$ is set (step S102), and the current price S, the strike price K and the risk-free interest rate r are also set (step S103).

The preprocessing unit 103 analyzes a historical volatility $\sigma$ by using these input data and set values. This historical volatility $\sigma$ is necessary for evaluation of a volatility of per year rate (step S104).

In units 104-107, a number of trial times (a total number of histories) N and period of computation $\Delta t$ are set (step S105). These numerals are necessary for execution of the Monte Carlo computation in the Boltzman engine 108.

The Boltzman engine 108 computes a Boltzman equation by using the Monte Carlo method to derive the probability density distribution (step S106). Here, in a case where the volatility is extremely large, or the time to maturity is extremely long, the period of the Mote Carlo calculation executed in the Boltzman engine 108 should be set shorter than a time interval in which the price of the underlying asset is given. Operation processes of the Boltzman engine 108 are as shown in FIG. 22. The processes will be explained later.

The Boltzman engine 108 further computes an option price from the probability density distribution and evaluates the option price (step S107). The output unit 109 displays a result of the evaluation by the Boltzman engine 108 as shown in FIG. 20. In case of necessity, the output unit 109 can print out the result (step S108).

Hereinafter, referring to a flowchart of FIG. 22, more precise process of the step S106 in the flowchart of FIG. 21 will be explained. This precise evaluation process is for a temporary movement of the price. This process is carried out by the Monte Carlo computation in the Boltzman engine 108.

First, the temperature parameters T0, c0 and g0 are set for the Boltzman equation (step S111). Next, an operation loop L11 related to the history number I and an operation loop L12 related to time t are iteratively executed by using the Monte Carlo calculation. The outer loop L11 is iterated until the history number I reaches to N. The inner loop L12 is iterated until the time t reaches to $\tau$ (steps S115-S117). In each cycle of the loop L11, the initial particle distribution is given at the step S114.

FIG. 23 shows examples of various time periods $\Delta t$ used in the present price evaluation system for the derivative security. A shorter period is better for the computation. However, if a shorter period is set, longer time is required for the computation. To avoid this trade-off condition, a comparably large period is set as long as the required accuracy can be obtained. In a typical case, the period is set to a time in which a moving range can become almost equal to a daily moving range when the volatility is about 50% per year. To meet to this requirement, the period $\Delta t$ is set by an expression (9).

$$\Delta t = (1/250)year \times (\sigma_0/\sigma)^2 \tag{9}$$

Here, $\sigma_0$=50%. However, the value of $\sigma_0$ should not be limited to 50%. An arbitrary value equal to or less than 100% can be acceptable. In here, the value of $\sigma 0$ is set to such a value by which calculation error will fall within an allowable range. A continuous curve C10 in FIG. 23 exhibits a reference for defining the period.

When the period $\Delta t$ and the total history number N are defined, the Boltzman engine 108 begins computation to solve the Boltzman equation (10) through the Monte Carlo method and derives the probability density function P.

$$\frac{\partial P}{\partial t} + S\Psi \frac{\partial P}{\partial S} + \int dv\, d\mu \left[ Sv\mu \frac{\partial p}{\partial S} + \Lambda_T p - \int dv'\, d\mu' Sp\Lambda_s \right]$$
$$= \delta(S - S_0)\delta(t) \tag{10}$$

Here, P is a risk-neutral probability measure of an underlying asset S, t is a time, S is a spot price, $\Psi$ is an expected return, v is an absolute value of a rate of return, and $\mu$ is a direction of price change. Further, $\Lambda_T$ is a collision frequency, which is a probability of price fluctuation per unit time. $\Lambda s$ is a memory effect of a price. The equation (10) is that is derived from the following equation (11). The financial Boltzman equation is given by the equation (11).

$$\frac{\partial p(S,v,\mu,t)}{\partial t} + S(\psi + \mu v)\frac{\partial p(S,v,\mu,t)}{\partial S} + \Lambda_T(S,v)p(S,v,\mu,t)$$
$$- \int dv'\, d\mu' Sp(S,v,\mu,t)\Lambda_S(S,v',\mu' \to v,\mu) = s(S,v,\mu,t) \tag{11}$$

This equation is linear and therefore, a uniqueness of solution is guaranteed. The Boltzman equation describes a probability density of price $p(S,\nu,\mu,t)$ in a phase space $(S,\nu,\mu,t)$. The equation (11) can be rewritten to a popular form in financial technology. Here, an integral of the $p(S,\nu,\mu,t)$ with respect to $\nu$ and $\mu$ is a probability measure P in the financial technology, and therefore, the integral becomes as follow.

$$P(S,t) = \int d\nu\, d\mu\, p(S,\nu,\mu,t) \tag{12}$$

By applying the same integral to the equation (11), the equation (10) can be derived. In the equation (10), for its no-arbitration characteristic, an initial condition is given as S=S0 for t=0. Then, an integral of the right side member of the equation (10) becomes a product of Dirac delta ($\delta$) function.

FIG. 24 illustrates European call option prices (BM) which are derived by the present price evaluation system for the derivative security, in contradiction with price curves that are derived by the conventional Black-Scholes method (BS). The abscissa axis represents K/S, namely strike price K normalized by the underlying asset price S. The vertical axis represents c/S, namely the price c of the derivative security, such as European call option, normalized by the underlying asset price S. Small black circles C1 and small white circles C2 represent prices of the derivative security obtained by the present embodiment system, while a dotted line curve C3 and a continuous line curve C4 represent corresponding price curves obtained by the conventional Black-Scholes method. The volatility per year was set at 500%. The small black circles C1 and the dotted curve C3 represent the results for an option where the time to maturity is set at 1/12 year (one month). The white small circles C2 and the continuous curve C4 represent the results for an option where the time to maturity is set at 2/12 year (two months). Comparing the option prices of ATM (at the money) where K/S=1, the call option price derived by the present system of the first embodiment is nearly half that of the conventional method.

FIG. 25 also illustrates European put option prices which are derived by the present price evaluation system for the derivative security, in contradiction with price curves that are derived by the conventional Black-Scholes method (BS). Small black circles C5 and small white circles C6 represent prices of the derivative security obtained by the present embodiment system, while a dotted line curve C7 and a continuous line curve C8 represent corresponding price curve obtained by the conventional Black-Scholes method. The volatility was also set at 500% per year. The small black circles C5 and the dotted curve C7 represent the results for an option where the time to maturity is set at 1/12 year (one month). The white small circles C6 and the continuous curve C8 represent the results for an option where the time to maturity is set at 2/12 year (two months). In this case, the put option price derived by the present system of the first embodiment is nearly half that of the conventional method.

As set forth hereinbefore, the present price evaluation system for the derivative security of the first embodiment in accordance with the present invention can more accurately price a derivative security that has a long time to maturity or large time fluctuations and therefore, it can facilitate its risk-hedge.

<Second Embodiment>

Hereinafter, a second preferred embodiment of the present invention will be explained with reference to FIGs. 26 and 27. The second embodiment is a price evaluation system for a derivative security, which is especially applicable to evaluating electricity prices. A movement of the electricity price inclines to contain regular fluctuation components or periodical fluctuation components. This is a different feature from the ordinal stock markets. Since it is difficult to separate regularly fluctuating components from irregularly fluctuating components, in some cases, it is permissible to treat fluctuations as what they are. However, for the purpose of strict evaluation of the electricity price, and depending on the situation, there may be a case wherein elimination of the regular fluctuation components is strongly desirable. In case that electricity prices are predictable to some extent based on data of electricity demands and atmosphere temperatures, it is possible to presume that differences between predicted prices and real prices fluctuate irregularly.

FIG. 26 illustrates a price evaluation system for a derivative security as the second preferred embodiment of the present invention. In this system, a preprocessing unit 1103 comprises more sophisticated function than that of the first embodiment in FIG. 19. This system comprises a reference setting unit 1102, which sets a reference value for a randomness test to the preprocessing unit 1103. Further, as shown in FIG. 27, an outputting unit 1109 displays more precise information on its screen.

Referring to FIG. 26, a market database 1101 is common with the first embodiment. The preprocessing unit 1103 retrieves necessary data from the market database 1101 and receives the reference value for the randomness test from the reference setting unit 1102, and carries out a randomness test based on the data received. The preprocessing unit 1103 also executes adjustment for regular fluctuations and averaging.

An option setting unit 1104 sets a type of option, a time to maturity of the option, a current price, a strike price, a risk-free interest rate and other necessary data. An initial data setting unit 1105 sets initial data. A total history number setting unit 1106 sets a total history number, and a period setting unit 1107 sets a period of computation.

By using preprocessed market data from the preprocessing unit 1103 and other necessary data from the units 1104, 1105, 1106 and 1107, and by a Monte Carlo method, a Boltzman engine 1108 computes a financial Boltzman equation to obtain a probability density function of a target derivative security, and further derives an option price of the derivative security from the probability density function. Here, the Boltzman engine 1108 of this second embodiment has the common function as that of the first embodiment shown in FIG. 19. An output unit 1109 readjusts the regular fluctuations to readjusted results from the Boltzman engine 1108 and displays the results on a screen as shown in FIG. 27 and print out the results as required.

In the illustration of the screen of FIG. 27, a box 1201 displays a market name currently selected. This box 1201 has a pull-down menu of a list of markets that are currently open, and a user can select any market from the list. Small windows 1202-1205 display movements of various market data, respectively.. Such as price data, demand data, trading volume data, trade position data (current clearing price data) are displayed, respectively. These data type are selectable by buttons attached adjacent to respective small windows 1202-1205. A small window 1206 displays important data that indicates conditions of the market, such as interest rates, exchange rates, and an indicative price and a change of electricity price from a preceding day.

In a small window 1207, important parameters directly related to transactions of a derivative security are inputted. Kinds of option to be inputted are not only the European call option and put option, but also Asian options, barrier options and other various options.

A small window 1208 is a special element that features the system for power exchange. In this small window 1208, various selections such as whether preprocessing is to be executed; and which method is to be used in case that the preprocessing is selected to be executed are carried out, and an evaluation reference (a limit value for a randomness test) is inputted. This small window 1208 also can display the result of the evaluation.

In a small window 1208, various data related to the financial Boltzman model are inputted and the result is displayed. The data to be inputted are various initial setting values, a period of computation, a number of history, and other necessary parameters. In this small window 1208, a graph which compares a distribution curve of a rate of return derived by the Boltzman model (the continuous line as shown in FIG. 27) with a distribution curve thereof by the conventional method of using the normal distribution model (the dotted line therein) is also displayed. In this system, also, the suitable parameters for the Boltzman model are preliminarily provided therein and these values are displayed as recommended values. Therefore, usually, the user can use these default values, and, only in a special case, the user can input more suitable values from this small window 1208.

Referring to FIGs. 26 and 28, an operation of this price evaluation system for the derivative security of the second embodiment will be explained. First, the preprocessing unit 1103 retrieves historical price data and trading volume (or historical demand value or supply value) data from the market database 1103 (step S121).

The preprocessing unit 1103 tests the randomness of the price fluctuations (step S122). The preprocessing unit 1103 also tests whether regular fluctuations exist in the price movement, and based on the user's setting, eliminates the regular fluctuation components from the data if necessary (step S123).

The time to maturity of the derivative security $\tau$ is set (step S124), and the current price S, the strike price K and the risk-free interest rate r are also set (step S125). The preprocessing unit 1103 computes a volatility of per year rate o (step S126).

The Boltzman engine 1108 reads out a number of trial times (a total number of histories) N and period of computation $\Delta t$, which are set in the units 1106 and 1107 (step S127).

The Boltzman engine 1108 solves a Boltzman equation by using the Monte Carlo method to derive a probability density distribution and a temporary movement of the price (step S128).

Next, in the output unit 1109, the regular fluctuation components are readjusted to the result from the Boltzman engine 1108 and feeds back the readjusted result to the Boltzman engine 1108 (step S129). The output unit 1109 readjusts by adding up the regular fluctuation components to the result, which components are once deduced in the preprocessing unit 1103.

The Boltzman engine 1108 further computes an option price from the probability density distribution P and evaluates the option price (step S130). The output unit 1109 displays the final result of the evaluation by the Boltzman engine 1108, as shown in FIG. 27. As necessary, the output unit 1109 can print out the result (step S131).

Here, the manner of computation by the Boltzman engine 1108 of this second embodiment is the same as that executed by the Boltzman engine 108 of the first embodiment. A flowchart is also common to that shown in FIG. 22. In case that the volatility is extremely high, or the time to maturity is extremely long, the period of the Mote Carlo calculation executed in the Boltzman engine 1108 should be set shorter than a time interval wherein the price of the underlying asset is given. This operation is conducted in the period setting unit 1107.

The preprocessing unit 1103 executes the test of randomness of the step S122. This preprocessing is very critical in a case where the price, such as electricity price, fluctuates regularly on seasonal, monthly, weekly or daily basis.

In the financial technology applied to the stock transactions, a price is supposed to move according to the geometrical Brownian motion. This stochastic process is given as an ultimate state of continuous time of a random walk. Therefore, at least in the discrete-time system, a price of an underlying asset is premised to randomly walk. This means impossibility of estimation of a future price from a current price. This hypothesis is widely accepted in the stock markets. However, as for an electricity price, because demand correlates with price, a future demand is estimable to some extent and therefore, capability of estimation of the future electricity price is not denied completely. If the future electricity price is estimable, power exchange markets will be excluded from an object of the financial technology.

Even if the future demand is estimable, the future price is not necessarily estimable. In some cases, the movement of the electricity price in the market becomes near to the random walk because of speculation and other factors. Accordingly, the presumption that "to estimate the future electricity price is impossible" is not always denied. Therefore, it is always necessary to check that to what extent the presumption of impossibility of estimation of the future electricity price can be applicable. For this judgment, run test is usually employed, though not only the run test but other appropriate methods are usable. In here, as a typical example, a method that uses the run test to judge whether the electricity price randomly walks will be explained.

If a discrete stochastic variable $X_{i+1}=X_i+e_i$ (i=1,2,⋯,n) is random walk, then at lease $e_i$ should (i) be random, (ii) have a certain variance, and (iii) be a steady process. Here, the steady process is defined as a process which expectation value is $E(e_i)$; which variance $var(e_i)$ is constant; and which covariance is a function of time period only. An expectation value and variance of a run having R runs, are described as an expression (13), by using m (number of $e_i>0$) and n (number of $e_i<0$).

$$E(R) = \frac{2mn}{m+n}+1$$
$$var(R) = \frac{2mn(2mn-m-n)}{(m+n)^2(m+n-1)}$$

$$(13)$$

In case that m and n are large, it is possible to approximate that Z-value by an expression (14) follows a normal distribution.

$$Z = \frac{R - E(R)}{\sqrt{var(R)}} \approx N(0,1) \tag{14}$$

Here, N(0,1) is a standard normal distribution. In accordance with a stochastic theorem, making a null-hypothesis wherein $e_i$ is random and taking into account that critical regions are 5% both sides of the normal distribution, then |Z| >1.96. When Z-value of past market data in a certain period is computed and an obtained absolute value of Z is equal to or less than 1.96, then the market data can be determined surely as the random walk.

FIG. 29 illustrates a result of a randomness test carried out against day-ahead electricity price in the CalPX during years of 1998-2001. Randomness is affirmative for day-average data because its Z-value is |Z|<1.96. However, randomness is negative for hourly data because its Z value is not fallen into |Z| >1.96. Consequently, it is possible to treat the day-average data of the electricity price in the same way with the stock market data. In contrast, a certain preprocessing is necessary for the hourly data of the electricity price. The simplest one of applicable preprocessing methods is to use data of a particular time in each day.

FIG. 30 illustrates a result of another randomness test carried out to the same electricity price in the CalPX. In this test, daily electricity price is defined by electricity price of a particular time in each day, and the randomness test was carried out on this daily electricity price. From FIG. 30, except a few exceptions, it is acceptable that the electricity price fluctuates randomly.

Additionally, it will be possible to judge whether the electricity price is random walk, if the unity of a variance of the electricity price is confirmed by F-test or other suitable tests. These tests are usable for the test of randomness. However, the randomness test by the run test or others is substitutable for judging whether the electricity price is random walk. In here, the run test is used.

The preprocessing unit 1103 carries out the randomness test on the electricity price, and from its objects, it excludes data that are judged non-random because of their regularity. The price evaluation system executes processes from step S124 to the remnant data.

Through this operation, obtained is a basis that approves this price evaluation system for the derivative security to evaluate an option price on the electricity price by presuming the electricity price data is random. In addition, a relationship between the electricity price and demand is usable for a process of eliminating regularity from the electricity price in the preprocessing unit 1103.

As shown in FIG. 17, the electricity price and demand do not correspond by one to one. The electricity price scatters to some extent even if a fixed electricity demand is given. As the general tendency shown by the line 33, however, the electricity price gradually increases with an increase in the electricity demand. In evaluating a derivative security price, it is possible to decrease a range of price fluctuations of an underlying asset by using this relationship. In this case, the volatility tends to decrease with a decrease in the option price. This feature makes this price evaluation system for derivative security of the second embodiment more competitive than other price evaluation systems.

In FIG. 17, the line 33 is a fitting line by a least square method using a linear function. This line 33 expresses the expression (7), which defines a relationship between the price S and the demand D. In this case, the correlation coefficient is 0.64. In an actual computation, firstly, a relationship between a price and a demand as that of the expression (7) should be derived from historical price and demand data in a particular period. Secondly, by using this relationship, temporary price is calculated from the historical demand data. Finally, the market price is subtracted by the temporary price to yield irregularly fluctuating components as an underlying asset. The volatility is computed based on this underlying asset. Attention should be paid to the correlation coefficient between the demand and the price in this case. In addition, by changing fitting equations according to the day of the week; whether weekday or weekend; the season of the year or the time of day, the accuracy of the volatility can be improved.

FIG. 31 illustrates a relationship between an electricity demand and a price in the CalPX of the year 2000. A relationship between the demand and the price in this case is less clear than that of the year 1999. A result of a least square fitting mechanically carried out to these data is as that of line 34. A relationship between the price S and the demand D expressed by a line 34 is as an expression (15).

$$S \ (\$/MWh) = -51.6 + 0.0076D \ (MW) \tag{15}$$

A correlation coefficient is 0.18, and in this case, the relationship between the price and demand is not so important. If a correlation coefficient as this case is obtained, it will be better to directly evaluate a price of a derivative security, as there is no correlation between the price and demand. An absolute value of correlation coefficient 0.2, for example, can be a criterion for judging whether there is a correlation.

By means of this price evaluation system for the derivative security of the second embodiment the price of the derivative security of the electricity price can be effectively evaluated.

<Third Embodiment>

Hereinafter, a third preferred embodiment of the present invention will be explained with reference to FIG. 32. FIG. 32 illustrates a price evaluation system for a derivative security as the third preferred embodiment of the present invention. A preprocessing unit 1303 retrieving necessary data from a market database 1301 and preprocessing, and an output unit 1309 outputting operation results are the same as the preprocessing unit 1103 and the output unit 1109 of the second embodiment shown in FIG. 26.

Features of this third embodiment exist in a geometrical Brownian motion model 1308.

The geometrical Brownian motion model is a model generally used in financial technology in order to describe price fluctuations of stocks and so on. The expression (5) approximates a summation of a trend term and a fluctuation term of normal distribution to an exponential fluctuation of a stock price. This reflects the fact that investors are interested in a rate of return rather than an absolute value of the price. The trend term, in the ordinal stock market, corresponds to the risk-free interest rate. On the other hand, the trend term, in the electricity market, corresponds to a daily-, weekly-, monthly- or annually-periodical fluctuation.

For the stock price, all elements except a drift term of the risk-free interest rate are supposed to be random. In contrast, for a product whose price fluctuates periodically such as electricity, in a case, estimating a magnitude of irregularly fluctuating components is impossible without eliminating these periodically fluctuating components. However, even the periodically fluctuating components are not always obtained easily. For this reason, an approximation by a trigonometric function of one day cycle or one week cycle is used as follows.

$$S(i) = a_0 + \sum_{j=1}^{m} \left\{ a_j \cos\left(\frac{2\pi}{L/j}i\right) + b_j \sin\left(\frac{2\pi}{L/j}i\right) \right\} \tag{16}$$

Here, the symbol i is a unit of time given in days for day-average data, and in hours for hourly data. In addition, the symbols aj and bj are coefficients obtained by a least square method, and the symbol L is a period of the periodical components. The symbol L is 7 for the daily data and L is 24 for the hourly data. In case that the day-average data are used, since there are only 7 data in one period, 3 is sufficient for the symbol m. 12 is also sufficient for the symbol m of the hourly data.

By this method, a large part of the fluctuations can be reduced even if the fluctuations do not completely follow the trigonometric function.

A waveform of day-ahead or week-ahead price fluctuations is also usable as the periodical fluctuation form.

To judge which form is effective for minimizing the fluctuations, testing is executed to the price fluctuations of the historical data in several preceding months or in the same term with the targeted derivative security, and as the result, one which can give smaller volatility is to be selected.

This type of adjustment should not always be necessary. In case that the data are seemed sufficiently random as the result of the randomness test, the adjustment would not be adopted. Further, the system administrator dares not to adjust by his/her own judgment. This decision depends on the system administrator such as a trader or a dealer. It is possible to provide a system that does not have the randomness testing function but only includes a function for regular fluctuation adjustment.

<Fourth Embodiment>

A fourth embodiment of the present invention is related to a risk management system for a power exchange. FIGs. 33A and 33B illustrate this risk management system for a power exchange. A multiple regression analyzer 2010 executes a multiple regression analysis between an electricity price Y and an electricity demand X1, an air temperature X2, an fuel price X3 or other economic data which affects to the electricity price Y, wherein the electricity price Y is electricity price data in a certain past period of a particular region. The multiple regression analyzer 2010 obtains a regression equation $Y=f(X1,X2,\cdots)$ as an electricity price fluctuation model by the multiple regression analysis.

When those parameters of the electricity demand X1, temperature X2, the fuel price X3 and others fluctuate randomly, an evaluation unit of price fluctuations 2020, based on the relationship $Y=f(X1,X2,\cdots)$, eliminates data of electricity price fluctuations, and evaluates a probability distribution. If the multiple regression analyzer 2010 computes a correlation among parameters such as the electricity demand X1, temperature X2, the fuel price X3 and others, it stores the correlation coefficient and a covariance matrix as data 2011. A random number generator 2030, by using the data 2011, generates correlated random numbers by using a multivariate normal distribution. By using these random numbers, respective simulators 2041,2042,$\cdots$simulate fluctuations of the electricity price X1, the temperature X2, the fuel price X3 and so on, respectively.

The evaluation unit of price fluctuations 2020 substitutes the results of these simulations into the regression equation $Y=f(X1,X2,\cdots)$ to obtain fluctuation data of the electricity price and to evaluate the probability distribution. One of the simplest methods for this evaluation of the probability distribution is a fitting by a normal distribution. An evaluation for higher moments such as a high skewness and kurtosis as well as an evaluation using the probability distribution is usable.

A risk measuring unit 2050 computes a quantity of risk by using the probability distribution of the electricity price fluctuations. If a risk-neutral probability distribution, or a probability measure, is obtainable by using a rate of risk-free asset, the risk computing unit 2050 also computes a price of a derivative security. A risk management unit 2060 records, stores, displays to a screen and, in the necessary case, prints out the data from the risk measuring unit 2050, and also carries out other pertaining processes for the data.

<Fifth Embodiment>

A fifth embodiment of the present invention will be explained with reference to FIGs. 34 and 35. A risk management system for a power exchange as the fifth embodiment manages a risk of power exchange by using only a relationship between an electricity demand and an electricity price. Here, it is possible to substitute demand data for temperature data or fuel price data.

A regular component extracting unit 2101 extracts regular components from historical electricity demand data 2120 to separate components of regular fluctuation 2121 and components of random fluctuation 2122. The components of regular fluctuation 2121 are components fluctuating periodically with a certain period, e.g., with one week period. The components of random fluctuation 2122 are residual components that are remained when the components of regular fluctuation 2121, which are extracted in the regular component extracting unit 2101, are subtracted from the electricity demand data 2120. The components of random fluctuation 2122 fluctuate similar to a normal distribution. Accordingly, it is possible to represent data of the components of random fluctuation 2122 by basic stochastic values such as a mean value and a standard deviation (or volatility), if a distribution of the data 2122 is supposed as the normal distribution. In case that the normal distribution is not applicable, higher moments such as skewness and kurtosis are used. The components also can be described by a functional form of a probability distribution.

An estimation unit of regular component 2102 transforms the components of regular fluctuation 2121 in the historical electricity demand data 2120 into components of regular fluctuation of a future electricity demand. The estimation unit 2102 further, based on the transformed components of regular fluctuation of future electricity demand and the components of random fluctuation 2122 of the historical demand data 2120, forms a fluctuation model of the future electricity demand to obtain a fluctuation data of the future electricity demand 2123.

On the other hand, a modeling unit of relationship of demand and price 2103 forms a model of a relationship between an electricity demand and an electricity price from the historical electricity demand data 2120 and the historical electricity price data 2124. The modeling unit of relationship of demand and price 2103 further computes fluctuation data of future electricity price 2125 by adapting the fluctuation data of the future electricity demand 2123 to the model of the relationship between the electricity demand and the electricity price.

Further, a risk measuring unit 2104 measures a risk from the fluctuation data of the future electricity price 2125 to evaluate necessitated quantity of risk 2126. The quantity of risk measured by the risk measuring unit 2104 is also used for evaluation of a price of derivative security 2127.

FIG. 35 illustrates an input and output screen of the risk management system for the power exchange of this fifth embodiment. A box 2200 displays a market name currently selected. This box 2200 has a pull-down menu for market selection among various markets that are currently open. In this box 2200, a user selects a target market, in which he/she wants to conduct trading of an underlying asset or a derivative security. A box 2201 displays a date of electricity-related data to be gained. The user can designate a date of electricity-related data to be gained in this box 2201.

Small windows 2202 and 2203 display fluctuations of demand data and price data that are designated from the box 2201. Types of data to be displayed in the small windows 2202 and 2203 are selectable in small buttons provided next to them, although typically the demand data and the price data are displayed. Small windows 2204 and 2205 display regular fluctuation components and random fluctuation components of the selected data, respectively. Kinds of data to be displayed in the small windows 2204 and 2205 are selectable in small buttons provided next to them, although typically those of the demand data are displayed.

A small box 2206 displays various important market data, such as interest rates, exchange rates, an indicative price of the electricity, and deviations from the previous day.

Small windows 2207 and 2208 display fluctuations of estimated values such as the future demand data and the price data. Kinds of data to be displayed in these small windows correspond to those displayed in the small windows 2202 and 2203, respectively. A small window 2209 displays the random components of the future data as a probability density function.

FIG. 36 illustrates a screen-copy of a typical input and output screen of the risk management system for the power exchange of the fifth embodiment. This screen shows only demand and price data of the market data.

A small window 2301 displays a trend graph of demand data to date, and a small window 2302 displays a trend graph of price data to date. A small window 2303 displays movements of regular fluctuation components and random components of the demand data, and a small window 2304 displays movements of the price data, respectively. A small window 2305 displays a relationship between the demand and the price of the power exchange. A small window 2306 displays random components of the future data as the probability density function. A small window 2307 displays a result of value at-risk computation, and a small window 2308 displays a result of option price computation. A type of option to be evaluated is selected in a box 2309. Selection of an estimation of the demand or the price is designated in a box 2310. A type of seasonal adjustment is selected in a box 2311. Selection of Boltzman model or Black-Scholes model is designated in a box 2312.

With respect to the risk management system for the power exchange shown in FIG. 34, the modeling unit of demand and price 2103 models the relationship between the electricity demand and price, as a simplest way, by the regression analysis as shown in FIG. 33. Since the relationship between the electricity demand and price shown in FIG. 17 is positive, a relation expression between the demand and price is available through the regression analysis. The demand data can be transformed to the price data by this relation expression.

FIGs. 37A-37F and FIGs. 38A-38F illustrate monthly relationships between an electricity demand (PX Demand) and an electricity price (Pool Price) of the day-ahead markets in the CalPX of the year 1999. A stronger positive correlation can be seen between the demand and price than that of FIG. 17. This means that the relationship between electricity demand and price does not change greatly within a month or so. Relation functions to be applied differ between summer season of July through September and winter season of January, February, November and December. This difference is caused by differences of types of running generators and generating costs. A linear regression expression for the demand data and price data of January 1999, for example, is obtained as an expression (17)

$$S[\$/MWh]=-31.5+0.0026D[MW] \qquad (17)$$

Here, S is the price and D is the demand. This regression expression (17) resembles the expression (7) that is obtained from the whole data of the year 1999. However, the correlation coefficient is 0.86 for the regression expression (17), and the fitting accuracy of this expression (17) is better than that of the expression (7). For respective other monthly data, higher fitting accuracy is available by using more adequate function form. Consequently, for deriving a preferable relationship between the electricity demand and price, the regression analysis to the data of the past one month or so is suitable. Although the data of September through November in the year 1999 contain a few irregular components, these kind of irregular components are treated as random terms.

The regular component extracting unit 2101 and the regular component estimating unit 2102 extract the regularly fluctuating components 2121 from the historical electricity demand data 2120 and estimate the regularly fluctuating components of future demand. This method will be explained hereinafter. Time series data are such as stock price data, electricity price data in the free market, exchange rate data, economic growth data, change in the number of solar spots, and so on. Especially, time series data relating to economic indexes are so called economic time series data. Seasonal adjustment is often conducted on the economic time series data because of their characteristics of seasonal variation. This seasonal adjustment is conducted to adjust seasonal factors from the data and to examine time fluctuations of the real economic indexes. An evaluation method of year-on-year rate comparison is one of the seasonal adjustment methods for a simple seasonal adjustment because dependency on the season is reduced by conversion to the rate value. However, as a strict method for seasonal adjustment, a method of extracting the regularly fluctuating components from the historical data by regression analysis is used. For this purpose, several models of more accurate estimation are proposed. These are a combination of moving average process and auto-regression process. Here, a method using an ARIMA (auto regressive integrated moving average) model, for an example, will be explained.

The ARIMA model is a model developed by the Bureau of the Census, Department of Commerce of the United States of America, and others. This model is a general method for seasonal adjustment (Yoshinobu Okumoto, "A Comparison Study of Seasonal Adjustment", Point of View Series of Policy Studies 17, Economic Research Institute of Economic Planning Agency of Japan, June 2000).

FIG. 39 illustrates periodical components of electricity price fluctuations derived by the ARIMA model and estimated future price fluctuations. Here, seasonal components were extracted from the data during 20th day through 70th day of the year 1999 and the future price fluctuations during 70th day through 90th day were estimated. The upper and lower dotted curves are confidence interval of 95% and the continuous lines are estimated values. Also, the continuous line with black dots on it shows a movement of the actual prices. On the graph of FIG. 39, the actual price line is given during the 20th day through the 70th day as well as the 70th day through the 90th day, added to the estimated data. Judging from this graph of FIG. 39, although the actual price movement seems to fall into the 95% confidential interval, differences from the estimated values are rather large.

FIG. 40 illustrates an estimation of the electricity demand obtained by the ARIMA model. From this illustration, it seems that an estimation of the electricity demand is apparently easier and more accurate than an estimation of the electricity price. This is a natural result from the fact that the periodicity of the price data 2124 is more distinct than that of the demand data 2120. As set forth hereinbefore, regarding seasonal adjustment and the estimation of the future values, demand data is easier to treat than price data. Consequently, in a case where a relationship between the demand data and the price data has already been obtained, it is recommendable firstly to estimate the future demand data 2123 from the historical demand data 2124 rather than to estimate the future price from the historical price data 2120, and secondly to compute the fluctuation model of the future price 2125 from the estimated future demand data 2123 and the relationship between the demand and price data.

This kind of periodicity is recognizable in hourly demand data of a day, in daily demand data of a week or in a monthly demand data of a year. Therefore, similar approach is usable to eliminate daily periodicity, weekly periodicity or monthly periodicity. The ARIMA model is merely one typical example, and various other methods such as a method of using year-to-year rate, EPA method developed by Economic Planning Agency of Japan (Yoshizo Abe, etc., "Adjusting method of seasonal fluctuations", Research series 22 of Economic Research Institute, Economic Research Institute of Economic Planning Agency of Japan, 1971), and MITI method developed by the Department of Trade and Industry of Japan are also usable.

The risk measuring unit 2104 measures a quantity of risk based on probability distribution. This risk measuring method by the risk measuring unit 2104 will be explained hereinafter. FIG. 41 illustrates a graph of a normal distribution with an average value of electricity asset $\mu$ and a standard deviation $\sigma$. In the graph, the shaded area is a critical region of 1% area ratio. A loss amount defined by $\mu$-$X_{L1}$ is a risk measure called VaR (value at risk). The electricity asset is defined by a product of the electricity price and energy. It is equally defined for multiple assets. For different kinds of assets, it is also defined on price basis by converting into prices. Further, as for the multiple assets, if they are assets mutually having correlations, a standard deviation of a distribution of the whole assets can be computable by using correlation coefficients.

With respect to the graph of FIG. 41, in a case where the value of the asset decreases to $X_{L1}$ by 1% probability,

the loss ($\mu-X_{L1}$) equals to (2.33 x σ) for normal distribution. As for standard deviation σ, that for a probability distribution in a targeted future period, e.g., in a month, is used. This value σ is in proportion with a square root of the time in case of Brownian motion, and it is computed by an expression (18).

$$\sigma=(\text{volatility \% per year}) \times (\text{year})^{0.5} \qquad (18)$$

It is expressed that "VaR in a month is $\mu-X_{L1}$ with 99% confidence." for the example of FIG. 41. A quantity of risk is evaluated by this value VaR.

Even if a distribution is not a normal distribution, a similar definition can be applicable. FIG. 42 illustrates an example of a probability distribution having a fat-tail feature. An asset in this case fluctuates in accordance with the probability distribution having a fat-tail feature. A point corresponding to a cumulative probability of 1% is found and that point is defined as $X_{L2}$. Namely, an area ratio below $X_{L2}$ of shaded region on a probability distribution function is equal to 1%. In this case, since $X_{L2}>X_{L1}$, for the similar 99% confidence, a loss amount of VaR(=$\mu-X_{L2}$) is larger than that of FIG. 41. This means that, for distribution having a fat-tail feature, the evaluation of the VaR on the normal distribution basis results in undervaluation. For this reason, it is very important for strict risk evaluation to obtain an accurate probability distribution of the future price.

In the present risk management system, the risk measuring unit 2104 measures a quantity of risk, and also hedges the risk. This function is the same as that of the risk management unit 2060, which is shown in FIG. 33. Derivative products such as options and futures are used for this risk-hedge. In case that an approximation by a normal distribution to a probability distribution is possible, an option price can be easily obtainable by using a volatility of per year rate and by applying the Black-Scholes formula (2).

There are various derivative products for risk hedge, such as put options, futures and swaps. For a risk management of a power exchange, if an evaluation of volatility is possible, these values can be easily obtained by using simple formulae such as the expression (2). The fluctuation model of the future electricity price 2125 is usable for computing, by combining with a fluctuation model of fuel cost, a spark spread option, and also usable for computing a value of a power plant by a real option method.

<Sixth Embodiment>

As a sixth embodiment of the present invention, a risk management method for a power exchange by using a computer system will be explained hereinafter. This risk management method for the power exchange deduces future fluctuations of electricity price directly from historical electricity demand data and historical electricity price data.

The electricity price can not easily be determined because various factors such as current electricity demand, restrictions on power transmission and price competitions (or speculations), as well as the power cost determined from fuel prices and types of running power generators, influence the electricity price. However, the electricity price is ultimately determined as an intersecting point of a supply curve and a demand curve of a real market and therefore, inspection of a relationship between the demand and price is very important.

FIG. 43A illustrates a curve of an aggregate supply offer and a curve of an aggregate demand bid of the day-ahead market in the CalPX at 6pm of January 29th of the year 1999. S0 is the market clearing price and D0 is the market clearing quantity at that time.

For a simple modeling, a supply curve and a demand curve are given as shown in FIG. 43B. In this case, the supply curve is given as a monotone increasing function to electricity supplies and the demand curve is given as a vertical line. Generally, electricity demand does not greatly change even if the electricity price greatly changes, and therefore, this assumption is not unrealistic. Here, suppose that the demand randomly fluctuates in accordance with the Brownian motion. Then, the market clearing price, namely the intersecting point of the supply curve and the demand curve, also randomly fluctuate. A fluctuation model of the electricity price becomes obtainable if a stochastic process of the fluctuations can be derived.

Here, the demand curve is supposed as being vertical, but a general curve and a monotone decreasing curve are equally acceptable. The supply curve is supposed as being stable and the demand curve is supposed to move according to the Brownian motion, but both curves fluctuate in the actual market. However, since the important point is only a distance between them, the assumption that only one of them fluctuates does not lose generality.

Assuming that there exists a certain functional relationship between the electricity demand and the electricity price, a stochastic process, to which the electricity price follows when the electricity demand moves on Brownian motion, will be derived by using Ito's lemma. Further, a differential equation dominating prices of derivative securities, which is based on the stochastic process, will be derived by using the non-arbitration principle.

First, the electricity demand is supposed to follow a geometrical Brownian motion (19).

$$\frac{dD}{D} = \mu_D dt + \sigma_D dz \qquad (19)$$

Here, D is the electricity demand, $\mu_D$ is a drift rate, t is time, $\sigma_D$ is a volatility, and dz is a Wiener process. Further, the relationship between the electricity demand D and the electricity price S is supposed to be expressed by an expression (20).

$$S = g(D) \qquad (20)$$

In here, note that the function g is supposed to allow its second order differentiation with respect to D, and it is also supposed a monotone-increase function or a monotone-decrease function within a targeted region so as its inverse function to be a single-valued function.

Ito's lemma is defined that if a random variable x follows Ito process (a generalized Wiener process) (21),

$$dx = a(x, t)dt + b(x, t)dz \qquad (21)$$

then a function G of x and t expressed by an expression (22) follows a stochastic process (also called Ito process).

$$dG = \left( \frac{\partial G}{\partial x} a + \frac{\partial G}{\partial t} + \frac{1}{2} \frac{\partial^2 G}{\partial x^2} b^2 \right) dt + \left( \frac{\partial G}{\partial x} b \right) dz \qquad (22)$$

By using this Ito Lenma, a stochastic process, to which the S in the expression (20) follows, is defined as an expression (23).

$$dS = \left\{ \frac{\partial S}{\partial D} \mu_D D + \frac{1}{2} \frac{\partial^2 S}{\partial D^2} (\sigma_D D)^2 \right\} dt + \left( \frac{\partial S}{\partial D} \sigma_D D \right) dz \qquad (23)$$

For simplicity, this expression is rewritten as an expression (24).

$$dS = \mu_S S dt + \sigma_S S dz \qquad (24)$$

Since S is possible in its second order differentiation with respect to D and its inverse function is uniquely defined, the expression (24) is acceptable. This expression (24) is the fluctuation model of the electricity price.

Although a specific function form of g(D) should be defined, here, the general argument will be explained further. Since symbols $\mu_S$ and $\sigma_S$ are not necessarily constant, the expression (22) does not necessarily follow the Brownian motion.

Hereinafter, a price of a derivative security on the electricity as an underlying asset will be evaluated, where the electricity follows the price fluctuation model defined by the expression (24). The price of the derivative security f on the underlying asset S is also a function of S and t, and therefore, Ito Lenma must follow a stochastic process (25).

$$\frac{df}{f} = \mu_f dt + \sigma_f dz \qquad (25)$$

In here, symbols $\mu_f$ and of are defined by an expression (26).

$$\mu_f = \left( \frac{\partial f}{\partial S} \mu_S S + \frac{\partial f}{\partial t} + \frac{1}{2} \frac{\partial^2 f}{\partial S^2} \sigma_S{}^2 S^2 \right) \Big/ f \qquad (26)$$

$$\sigma_f = \left( \frac{\partial f}{\partial S} \sigma_S S \right) \Big/ f$$

Then, in order to hedge a risk of this derivative security, consider a portfolio $\Pi$ of one unit of the derivative security and $\partial f/\partial S$ unit of the electricity (27).

$$\Pi = -f + \frac{\partial f}{\partial S} S \qquad (27)$$

Since $\Delta S$ and $\Delta f$ can be described as an expression (28),

$$\Delta S = \mu_S S \Delta t + \sigma_S S \Delta z$$
$$\Delta f = \mu_f f \Delta t + \sigma_f f \Delta z \qquad (28)$$

a fluctuation $\Delta \Pi$ within an infinitesimal time $\Delta t$ can be described as an expression (29).

$$\Delta \Pi = -\Delta f + \frac{\partial f}{\partial S} \Delta S$$
$$= -\left( \frac{\partial f}{\partial S} \mu_S S + \frac{\partial f}{\partial t} + \frac{1}{2} \frac{\partial^2 f}{\partial S^2} \sigma_S{}^2 S^2 \right) \Delta t - \left( \frac{\partial f}{\partial S} \sigma_S S \right) \Delta z \qquad (29)$$
$$+ \left( \mu_S S \Delta t + \sigma_S S \Delta z \right) \frac{\partial f}{\partial S}$$
$$= -\left( \frac{\partial f}{\partial t} + \frac{1}{2} \frac{\partial^2 f}{\partial S^2} \sigma_S{}^2 S^2 \right) \Delta t$$

With respect to this expression (29), this expression does not include uncertain fluctuation $\Delta z$ and therefore, the portfolio can be deemed to be a risk-free portfolio within the infinitesimal time $\Delta t$. Additionally, it should be noticed that this fluctuation of the portfolio does not include $\mu_S$. This drift term of the underlying asset $\mu_S$ has been cancelled.
According to the principle of non-arbitration price, a fluctuation of the portfolio value (namely return) should be equal to a fluctuation of the asset value, which is expected when the same amount of cash as the $\Pi$ is invested in a safe asset of a risk-free interest rate r. This is expressed as an expression (30).

$$\Delta \Pi = r \Pi \Delta t$$
$$= r \left( -f + \frac{\partial f}{\partial S} S \right) \Delta t \qquad (30)$$

In other case, an arbitrage opportunity will be caused. By comparison between the expressions (29) and (30), a differential equation (31) that is satisfied by the derivative security f is obtained.

$$\frac{\partial f}{\partial t} + rS \frac{\partial f}{\partial S} + \frac{1}{2} \sigma_S{}^2 S^2 \frac{\partial^2 f}{\partial S^2} - rf = 0 \qquad (31)$$

This expression (31) resembles the Black-Scholes differential equation. The only difference between them is that $\sigma_S$ is a constant representing a volatility for the Black-Scholes equation, on the other hand that $\sigma_S$ is given by an expression (32) for the expression (31).

$$\sigma_S = \frac{\partial S}{\partial D} \sigma_D D / S \tag{32}$$

In the expression (32), if the $\sigma_S$ is a constant, the price of a derivative security such as European call option is easily obtained by the Black-Scholes formula (2). For an example, if S can be expressed as an expression (33),

$$S = c_D D^\alpha \tag{33}$$

then, $\sigma_S$ is expressed by an expression (34), and this $\sigma_S$ becomes a constant.

$$\sigma_S = \alpha \sigma_D \tag{34}$$

In this case, the option price can be obtained from the Black-Scholes formula (2) by substituting the volatility o therein with $\alpha \sigma_D$. This is a logical conclusion from a characteristic of the lognormal distribution.

Other price evaluation method of a derivative security will be explained hereinafter. In this method, a function form of S is defined differently from the expression (33). A pay-off function of a call option is known, and a stochastic process of an electricity price will be resolved through the Monte Carlo method by the expressions (23) and (24).

The differential equation (31), to which a derivative security f on an underlying asset of the electricity price follows, does not include the drift term $\mu_S$ of the underlying asset price. In other words, the drift term of the underlying asset does not affect the price of the derivative security. This is because the price of the derivative security drifts with the drift of the underlying asset.

The drift term is not necessarily unimportant. It is rather important to define a form of the drift term. Because the drift term is selected as a random term so as to be risk neutral, the form of the drift term does not affect to the option price. Periodically fluctuating terms should be excluded as much as possible by using such as the seasonal adjustment method set forth hereinbefore. To define the form (such as a periodicity and amplitude) of the drift term is easier for demand than for price. For this reason, the method of assuming fluctuations in demand is suitable for price evaluation of the electricity option.

A spiking fluctuation of the electricity price, as is often observed in electricity markets, is reproducible if a relationship such that when the demand D increases beyond a certain value, the electricity price begins to rapidly increase can be seen between the demand D and the electricity price. Here, suppose an exponential relationship between D and S as expressed by an expression (35).

$$\frac{S}{S_0} = exp[k(D-D_0)/D_0] \tag{35}$$

Even in this case, when the demand is D0, the price is S0. A price fluctuation process of the underlying asset S can be expressed as an expression (36) by using Ito Lenma, when the demand moves under the geometrical Brownian motion.

$$dS = S\left[\mu_D kx + \frac{1}{2}\sigma_D{}^2 k^2 x^2\right]dt + S\sigma_D kxdz \tag{36}$$

Here, x is expressed as an expression (37).

$$x = 1 + \frac{1}{k}\ln\left(\frac{S}{S_0}\right) \tag{37}$$

The expression (36) is not the Brownian motion. In this case, the option price can be evaluated by the Monte Carlo method.

FIG. 44A illustrates the price fluctuations following to the expressions (35) through (37). In this case, k=1 and the volatility of the demand is 100% per year. In FIG. 44A, compared with the general geometrical Brownian motion, rather high peaks appear in the price fluctuations.

FIG. 44B illustrates a logarithmic price distribution, which shifts to the higher side from the normal distribution of dotted line.

<Seventh Embodiment>

As a seventh embodiment of the present invention, a risk management method for a power exchange by using a computer system will be explained hereinafter. This risk management method for the power exchange deduces a relationship between an electricity demand and an electricity price, wherein electrical conditions of a electric power system and restrictions for power transmission are taken into account. Even though a simple model of an electric power system will be used here for explanation of a principle method, a similar method is practically applicable to power systems of large scale.

FIG. 45 illustrates an example of a system of four buses comprising two generators and two loads. A node 1 is a slack generator G1, whose power is undefined. This node 1 is a phase reference. A node 2 and a node 3 are loads. A node 4 is a power generator G4, a power of which is fixed to a certain value. A transformer of tap ratio 1:1 is provided between the node3 and the node 4. In FIG. 45, numerals given on the lines are impedance expressed by the per-unit method, V is a voltage, P is an active power, and Q is a reactive power. Here, by changing P and Q of the node 2, generated power by the node 1, voltages of the respective nodes, transmission loss and so on are computed. The reactive power of the node 2 is adjusted so that the node voltage is constant.

FIG. 46 illustrates a relationship between the electricity demand and cost, which is computed based on the assumption of cost functions for respective generators. The generator G1 is one of comparatively low cost, and the generator G4 is one of comparatively high cost. Dotted lines are relationships obtained when the computation was executed without considering the transmission restrictions. With respect to this result of the dotted lines, only electricity generated by the generator G1 increases while electricity generated by the generator G4 is approximately constant, and an inclination of cost increase is moderate. In contrast, continuous lines are results obtained when the computation was executed with taking account of the transmission restrictions. In this latter case, an upper limit is set for transmission capacities of the nodes 1 and 3. This upper limit was 0.6p.u. With respect to the continuous lines, it can be seen that a quantity of the transmission from the generator G4 increases and a cost also increases with an increase in the electricity demand. Generally, when the transmission restrictions are given, the electricity price tends to elevate because it becomes necessary to operate high cost generators. The electricity price is generally determined by the marginal cost. By considering all power generators in the area considered, one can obtain the relation between the demand (=load) and the electricity price. By using this relation and the fifth embodiment, one can obtain the price fluctuation model.

<Eighth Embodiment>

As the eighth embodiment of the present invention, a risk management method for a power exchange by using a computer system will be explained hereinafter. This risk management method for the power exchange can deduce fluctuations of an electricity price by using a relationship between an electricity demand and price. In this method, it is assumed that fluctuations of the electricity demand comprise regular components and irregular components, where the regular components can be defined according to the date in a year, the time of day or the day of the week in the historical demand data. This method regards components of the same season in the historical data, components of the corresponding same weather conditions in the historical data, or their properly approximated data as the regular components. This manner is similar to that of using the year-on-year ratio for the seasonal adjustment.

As for the electricity market, it is difficult to find data of exactly same condition in the historical data because of its historical shortness, so the most preferable data in the historical data will be chosen. In some cases, data just used before may be used. In the financial technology, it is necessary to eliminate regularity utmost by employing the current best knowledge, so remnant portions are seen to be random components. In this case, uncertainty will grow large and risk will grow large. Those facts, however, are unavoidable because of unpredictability even for the current best knowledge.

The ARIMA model described related to the fifth embodiment is usable for the elimination method of the regular components. Other methods are also usable. One of other methods such as moving average method, moving median method, least square method and Fourier analysis is used here as an evaluation method of regular fluctuation components of an electricity demand or an electricity price.

The moving average method is a method to smooth the data series by averaging the data for each time and the data immediately preceding and after it, in order to define the obtained average data as a data of the time. The moving median method is a method of using medians instead of averages used in the moving average method. This moving median method is employed to avoid a drawback of the moving average method. The drawback of the moving average method is that error increases if the data series contain abnormal values. If data series such as the electricity price contain spike-shaped fluctuations and therefore many abnormal values are contained therein, the moving median method can produce less error than the moving average method.

The least square method is a method of fitting a specific function to target data so as square average error to be the least possible. Depending on function forms, this method can smooth the data series. The Fourier analysis is a method of approximating data series by trigonometric series, so it can approximate periodical components of the data by a sum of trigonometric functions. The periodical components of the data can be expressed by a combination of the least square method and the Fourier analysis. This combination also can be usable for seasonal adjustment. For electricity price data, in order to extract periodical components based on seven points of data of one week (seven days), where data is day-average prices of electricity, the least square fitting by a function form such as the expression (16) is effective for a simple seasonal adjustment. In here, eliminating unstable components from the data by the moving average method or the moving median method before adjusting seasonality can improve the accuracy of the fitting, but is not always necessary for a short-term evaluation.

There may be a case whereby plural electricity assets are provided and electricity transactions are conducted with combining plural electricity supply plans and demand plans. In such a case, with respect to an electricity price of each transaction, by measuring a risk of each electricity asset by means of the systems and methods set forth hereinbefore, the total risk is possible to obtain.

Additionally, in the same case set forth above, it is also possible to measure risk by the systems and methods of the fourth through eighth embodiments with respect to each electricity price of the transactions, and to obtain a probability distribution for randomly fluctuating components by the Monte Carlo simulation.

In a case where a power cost and a supply price fluctuate, distributions of return were computed by the Monte Carlo simulation for several demand patterns. Results are shown in FIGs. 47 and 48. FIG. 47 illustrates the result of the demand curve being comparatively temporally flat. FIG. 48 illustrates the result of the demand curve being temporally biased. Width of the return of FIG. 48 is broader compared to that of FIG. 47. This is because a risk of future electricity asset is relatively large. In both cases, since the distributions of return were obtained, risk evaluation is possible from these distributions.

The risk measuring unit 2104 computes necessary data for risk management from the electricity price distribution shown in FIG. 34. As this risk measuring unit 2104, such means can be employable that compute the risk neutral probability distribution by the financial Boltzman model explained by the expressions (10) through (12) and measures the risk, in order to evaluate the fluctuating components of the electricity price.

The financial Boltzman model is an extended model of a diffusion model and it can be usable to evaluate derivative prices for not only the normal distribution but also for various types of price distribution. Since the Boltzman model can incorporate the fat-tail therein without losing its continuity, it can guarantee reproducibility and make risk-hedge of a derivative security easy.

FIG. 49 illustrates a distribution of an exponential daily rates of return $\ln(S_i/S_{i-1})$, which is computed for day-average electricity prices in the CalPX. Dotted line is a fitting curve by a normal distribution. A distribution of the real data shifts from the normal distribution and its kurtosis is large, so the fat-tail is observed.

In FIG. 50, a continuous line curve illustrates a distribution of exponential daily rates of return $\ln(S_i/S_{i-1})$, whereby the electricity prices were computed by financial Boltzman model. The dotted line is also a fitting curve by a normal distribution. The Boltzman model can treat this kind of distribution that is shifting from normal distribution. Consequently, the Boltzman model is very usable for describing fluctuations of the electricity price because it can more easily approximate the real daily rates of return than the normal distribution.

Since the financial Boltzman equation is linear, its solution is continuous and completeness of the market is guaranteed. The fat-tail can be incorporated into the Boltzman model without losing the model's continuity. Consequently, the Boltzman model is suitable for risk-hedge of the electricity assets.

FIGs. 51 and 52 illustrate results of virtual simulations conducted for dynamic hedge by using the electricity data in the CalPX. FIGs. 51A through 51C illustrate results of virtual simulation of the dynamic hedge by the Black-Scholes model. FIGs. 52A through 52C illustrate results of virtual simulation of the dynamic hedge by the Boltzman model. A symbol c is the price of European call option, a symbol $\Delta$ is delta of the option. In these examples, when a price of underlying asset was 96[\$/MWh] (data of October 19, 2000), the dynamic hedge for a seller to an option with a strike price of 200[\$/MWh] and a time to maturity of 30days was executed. In here, assuming that an interest rate is 0 and a volatility is 370% per year, the simulation for 30days was carried out in a range from OTM (K/S>1; out of money) to ATM (K/S=1; at the money). In this case, portfolio $\Pi(=-c+\Delta S)$ was rebuilt by trading the underlying asset (electricity) S every hour. Initial value of $\Pi$ was $\Pi_0$.

Comparing the results by the Black-Scholes model (BS model for short) as shown in FIGs. 51A through 51C and by the Boltzman model (BM model for short) as shown in FIGs. 52A through 52C, since the option price c of BM model is smaller than that of BS model, the hedge cost on the OTM is also smaller. Further, since the delta Δ of BM model is smaller than that of BS model, an error is also smaller. Although the error of BM model is larger than that of BS model at the ATM, the error is not critical because, at the ATM, dealers transact mainly based on real market data rather than on theoretical values.

As set forth hereinbefore, since the financial Boltzman model is a very effective method for hedging the electricity derivatives, effective risk management can be realized by the risk management methods of the present invention.

In here, instead of the electricity price, the electricity demand, and the electricity supply etc., logarithms thereof or ratios to a fixed reference time are also usable.

**Claims**

1. A system for price evaluation of a derivative security comprising:

   a first data receiving unit configured to receive input data of a product price and a product supply or input data of a product price and a product demand of a product during a particular trading period, or receiving input data of a stock price and a trading volume of a stock during a particular trading period;
   a second data receiving unit configured to receive input data of a time to maturity of the derivative security, a current price and a strike price of an underlying asset, and a risk-free interest rate;
   a third data receiving unit configured to receive input data of a period and a number of total histories for a Monte Carlo simulation;
   a first processing unit configured to solve a Boltzman equation by the Monte Carlo simulation, wherein the Monte Carlo simulation uses the period and the number of total histories, to compute a probability distribution of the product price or the stock price;
   a second processing unit configured to compute a price of the derivative security from the probability distribution; and
   an output unit configured to output the price of the derivative security.

2. A system for price evaluation of a derivative security comprising:

   a first data receiving unit configured to receive input data of a product price and a product supply or input data of a product price and a product demand of a product during a particular trading period, or receiving input data of a stock price and a trading volume of a stock during a particular trading period;
   an eliminating unit configured to extract regularly fluctuating components from the data of the product price and the product supply or the data of the product price and the product demand of the product, or the data of the stock price and the trading volume of the stock and to eliminate the regularly fluctuating components from the data;
   a second data receiving unit configured to receive input data of a time to maturity of the derivative security, a current price and a strike price of an underlying asset, and a risk-free interest rate;
   a third data receiving unit configured to receive input data of a period and a number of total histories for a Monte Carlo simulation;
   a first processing unit configured to solve a Boltzman equation by the Monte Carlo simulation, wherein the Monte Carlo simulation uses the period and the number of total histories, to compute a probability distribution of the product price or the stock price;
   a second processing unit configured to compute a price of the derivative security from the probability distribution;
   an adjusting unit configured to adjust the price of the derivative security by the regularly fluctuating components to obtain an adjusted price of the derivative security; and
   an output unit configured to output the adjusted price of the derivative security from the adjusting unit.

3. A method of price evaluation of a derivative security comprising the steps of:

   receiving input data of a product price and a product supply or input data of a product price and a product demand of a product during a particular trading period, or receiving input data of a stock price and a trading volume of a stock during a particular trading period;
   receiving input data of a time to maturity of the derivative security, a current price and a strike price of an underlying asset, and a risk-free interest rate;

receiving input data of a period and a number of total histories for a Monte Carlo simulation;
solving a Boltzman equation by the Monte Carlo simulation, wherein the Monte Carlo simulation uses the period and the number of total histories, to compute a probability distribution of the product price or the stock price;
computing a price of the derivative security from the probability distribution; and
outputting the price of the derivative security.

4. A method of price evaluation of a derivative security comprising the steps of:

receiving input data of a product price and a product supply or input data of a product price and a product demand of a product during a particular trading period, or receiving input data of a stock price and a trading volume of a stock during a particular trading period;
extracting regularly fluctuating components from the data of the product price and the product supply of the product or the data of the product price and the product demand of the product, or from the data of the stock price and the trading volume of the stock;
eliminating the regularly fluctuating components from the data;
receiving input data of a time to maturity of the derivative security, a current price and a strike price of an underlying asset, and a risk-free interest rate;
receiving input data of a period and a number of total histories for a Monte Carlo simulation;
solving a Boltzman equation by the Monte Carlo simulation, wherein the Monte Carlo simulation uses the period and the number of total histories, to compute a probability distribution of the product price or the stock price;
computing a price of the derivative security from the probability distribution;
adjusting the price of the derivative security by the regularly fluctuating components to obtain an adjusted price of the derivative security; and
outputting the adjusted price of the derivative security.

5. A method of price evaluation of a derivative security in accordance with claim 3 or 4: wherein an electricity is used as the product, and the price of the derivative security of the electricity is computed.

6. A method of price evaluation of a derivative security in accordance with claim 3 or 4: wherein, as the underlying asset, a product or a stock which has a historical volatility of the product price or the stock price of at least 100% is used, and the price of the derivative security of the product is computed.

7. A method of price evaluation of a derivative security in accordance with claim 3 or 4: wherein electricity is used as the product and a day-average, a week-average or a month-average of an electricity price is used as the underlying asset, and the price of the derivative security of the product is computed.

8. A method of price evaluation of a derivative security in accordance with claim 3 or 4: wherein electricity is used as the product and a price of a particular time of each day, a maximum price of each day or an average price of a particular period of each day is use as a daily price of the product price, and the price of the derivative security of the product is computed.

9. A method of price evaluation of a derivative security in accordance with claim 3 or 4: wherein a price of the product of a particular time and a particular day of each week or an average price of the product of a particular day of each week is used as the underlying asset, and the price of the derivative security of the product is computed.

10. A system for price evaluation of a derivative security comprising:

a first data receiving unit configured to receive input data of a product price and a product supply or input data of a product price and a product demand of a product during a particular trading period, or to receive input data of a stock price and a trading volume of a stock during a particular trading period;
an eliminating unit configured to extract regularly fluctuating components from the data of the product price and the product supply or the data of the product price and the product demand of the product, or the data of the stock price and the trading volume of the stock and to eliminate the regularly fluctuating components from the data;
a second data receiving unit configured to receive input data of a time to maturity of the derivative security, a current price and a strike price of an underlying asset, and a risk-free interest rate;

a third data receiving unit configured to receive input data of a period and a number of total histories for a Monte Carlo simulation;

a first processing unit configured to solve an equation of Brownian motion by using the period and the number of total histories to compute a probability distribution of the product price or the stock price;

a second processing unit configured to compute a price of the derivative security from the probability distribution;

an adjusting unit configured to adjust the price of the derivative security by the regularly fluctuating components to obtain an adjusted price of the derivative security; and

an output unit configured to outout the adjusted price of the derivative security from the adjusting unit.

**11.** A method of price evaluation of a derivative security comprising the steps of:

receiving input data of a product price and a product supply or input data of a product price and a product demand of a product during a particular trading period, or receiving input data of a stock price and a trading volume of a stock during a particular trading period;

extracting regularly fluctuating components from the data of the product price and the product supply of the product or the data of the product price and the product demand of the product, or from the data of the stock price and the trading volume of the stock;

eliminating the regularly fluctuating components from the data;

receiving input data of a time to maturity of the derivative security, a current price and a strike price of an underlying asset, and a risk-free interest rate;

receiving input data of a period and a number of total histories for a Monte Carlo simulation;

solving an equation of Brownian motion by using the period and the number of total histories to compute a probability distribution of the product price or the stock price;

computing a price of the derivative security from the probability distribution;

adjusting the price of the derivative security by the regularly fluctuating components to obtain an adjusted price of the derivative security; and

outputting the adjusted price of the derivative security.

**12.** A risk management method for a power exchange comprising the steps of:

finding a model of electricity price fluctuations by taking into account of a correlation between an actual electricity price and a parameter relating to the actual electricity price;

computing a probability distribution of electricity price fluctuations against irregular fluctuations of the parameter based on the model of electricity price fluctuations; and

evaluating a risk of an electricity price by using the probability distribution of electricity price fluctuations.

**13.** A risk management method for a power exchange in accordance with claim 12: wherein the parameter is at least one of an actual electricity demand, a temperature and a fuel cost.

**14.** A risk management system for a power exchange comprising:

a analysis unit of electricity price fluctuation configured to compute a correlation between historical electricity prices of a particular time period in a particular geometrical area and economic data relating to the historical electricity prices, and to find a model of electricity price fluctuations;

an evaluation unit configured to evaluate a probability distribution of electricity price fluctuations against irregular fluctuations of the economic data based on the model of electricity price fluctuations; and

a risk measuring unit configured to calculate a quantity of risk based on the probability distribution of electricity price fluctuations.

**15.** A risk management system for a power exchange in accordance with claim 14: wherein the economic data is at least one of actual electricity demands, an actual electricity demand curve, an actual electricity supply curve, temperature data and fuel costs of respective power generators.

**16.** A risk management system for a power exchange in accordance with claim 14, further comprising:

a risk management unit configured to control the quantity of risk calculated by the risk measuring unit.

**17.** A risk management system for a power exchange in accordance with claim 14, further comprising:

a calculating unit configured to calculate a derivative security price for a risk hedge on a power exchange based on the quantity of risk calculated by the risk measuring unit.

**18.** A risk management system for a power exchange in accordance with claim 14: wherein the analysis unit of electricity price fluctuations carries out a regression analysis.

**19.** A risk management system for a power exchange in accordance with claim 14: wherein the evaluation unit uses a fitting by a normal distribution.

**20.** A risk management system for a power exchange in accordance with claim 14: wherein the evaluation unit evaluates a skewness and a kurtosis of the probability distribution of electricity price fluctuations.

**21.** A risk management method for a power exchange comprising the steps of:

deriving periodically fluctuating components and randomly fluctuating components from historical parameter data, which the historical parameter data affect to electricity price fluctuations;
evaluating periodically fluctuating components and randomly fluctuating components of historical electricity price by using the periodically fluctuating components and the randomly fluctuating components of the historical parameter data; and
measuring a market risk of electricity price fluctuations, based on the periodically fluctuating components and the randomly fluctuating components of the historical electricity price.

**22.** A risk management method for a power exchange in accordance with claim 21: wherein the parameter is at least one of power demand, temperature and fuel cost.

**23.** A risk management system for a power exchange comprising:

a first extracting unit configured to extract periodically fluctuating components of a parameter from historical parameter data, where the parameter is that of affecting to electricity price fluctuations;
a second extracting unit configured to extract periodically fluctuating components of an electricity price from historical electricity price data, where a period of the historical electricity price data corresponds to that of the historical parameter data;
a deriving unit configured to derive a relationship between the periodically fluctuating components of the parameter and the periodically fluctuating components of the electricity price;
a first forecasting unit configured to forecast future fluctuations of the parameter by using the periodically fluctuating components of the parameter;
a second forecasting unit configured to forecast periodically fluctuating components of a future electricity price by adapting the relationship derived by the deriving unit to the future fluctuations of the parameter;
an evaluating unit configured to evaluate the randomly fluctuating components of the historical electricity price;
a computing unit configured to compute a probability distribution of electricity price fluctuations from the periodically fluctuating components of the future electricity price and the randomly fluctuating components of the historical electricity price; and
a measuring unit configured to measure a quantity of risk by using the probability distribution of the electricity price fluctuations.

**24.** A risk management system for a power exchange in accordance with claim 23: wherein the parameter is at least one of power demand, temperature and fuel cost.

**25.** A risk management system for a power exchange in accordance with claim 23: wherein the first extracting unit extracts the periodically fluctuating components of the parameter from the historical data thereof by using a moving average method, a moving median method, a least square method or a Fourier analysis.

**26.** A risk management system for a power exchange in accordance with claim 23: wherein the evaluating unit analyzes the historical electricity price data by a financial Boltzman model to find a risk-neutral probability distribution.

**27.** A risk management method for a power exchange comprising the steps of:

deriving a relationship between a power supply or demand and an electricity price from data of historical power supply or power demand and data of historical electricity price;

evaluating, by using the relationship between the power supply or the power demand and the electricity price, a probability distribution of electricity price fluctuations relating to uncertain fluctuations of a power supply or a power demand in a given period for evaluation of a market risk; and

measuring a market risk of an electricity price by using the probability distribution of electricity price fluctuations.

28. A risk management system for a power exchange comprising:

a deriving unit configured to derive a relationship between a power supply or demand and an electricity price from data of historical power supply or power demand and data of historical electricity price of a particular area in a particular period;

an evaluating unit configured to evaluate a probability distribution of electricity price fluctuations relating to uncertain fluctuations of power supply or power demand in a given period for evaluation of a market risk; and

a measuring unit configured to measure a market quantity of risk of an electricity price by using the probability distribution of electricity price fluctuations.

29. A risk management system for a power exchange in accordance with claim 28, further comprising:

a risk management unit configured to control the quantity of risk measured by the measuring unit.

30. A risk management system for a power exchange in accordance with claim 28, further comprising:

a calculating unit configured to calculate a price of a derivative security by using the quantity of risk to hedge a power exchange.

31. A risk management system for a power exchange in accordance with claim 28: wherein the deriving unit derives a fluctuation model of an electricity price from the power demand; and, in deriving the fluctuation model, the deriving unit transforms by Ito Lenma a stochastic process of power demand fluctuations into a stochastic process of electricity price fluctuations.

32. A risk management system for a power exchange in accordance with claim 28: wherein the deriving unit derives a relationship between a power demand and a power cost from constraints of an electrical power system and cost functions of power generators connected to the electrical power system, and defines a fluctuation model of electricity price from the relationship between the power demand and the power cost.

33. A risk management method for a power exchange comprising the steps of:

extracting historical regularly- or periodically-fluctuating components, which regularly or periodically fluctuates depending on conditions of season, time of day, day of the week or weather, and historical randomly-fluctuating components from historical power demand data;

estimating future regularly- or periodically-fluctuating components of a power demand from the historical regularly- or periodically-fluctuating components on similar conditions with the conditions on which the historical components are extracted;

estimating future fluctuations of the power demand based on the future regularly- or periodically-fluctuating components;

adapting a given demand-price relationship of electricity to the future fluctuations of the power demand to deduce future fluctuations of the electricity price; and

measuring a quantity of risk by using the future fluctuations of the electricity price.

34. A risk management method for a power exchange, wherein plural power exchanges based on plural power supplies and power demands are carried out, comprising the steps of:

deriving respective relationships between power supplies or power demands and electricity prices from data of historical power supply or power demand and data of historical electricity price for the respective power exchanges;

evaluating, by using the respective relationships, respective probability distributions of electricity price fluctuations relating to uncertain fluctuations of the power supply or the power demand in a given period for evaluation of a market risk; and
measuring the market risk of electricity price by using the respective probability distributions of electricity price fluctuations for a comprehensive risk-evaluation to the electricity price fluctuations.

**35.** A risk management method for a power exchange, wherein plural power exchanges based on plural power supplies and power demands are carried out, comprising the steps of:

deriving respective relationships between power supplies or power demands and electricity prices from data of historical power supply or power demand and data of historical electricity price for the respective power exchanges;
evaluating, by using the respective relationships, respective probability distributions of electricity price fluctuations relating to uncertain fluctuations of the power supply or the power demand in a given period for evaluation of a market risk;
measuring the market risk of electricity price by using the respective probability distributions of electricity price fluctuations;
deriving a probability distribution for randomly fluctuating components by a Monte Carlo simulation; and
evaluating a market risk of the electricity price fluctuations.

**36.** A risk management method for a power exchange in accordance with claim 35: wherein the Mote Carlo simulation employs a financial Boltzman model to derive a risk-neutral probability distribution, and the risk-neutral probability distribution is used for the risk evaluation.

FIG. 1

FIG. 2

FIG. 3

FIG. 4

EUROPEAN CALL (BS MODEL):
$\tau = 0.25$, r=0.0

FIG. 5

EUROPEAN PUT (BS MODEL):
$\tau = 0.25$, r=0.0

FIG. 6

## EUROPEAN CALL (BS MODEL):
### $\sigma = 0.5$, r=0.0

FIG. 7

## EUROPEAN PUT (BS MODEL):
### $\sigma = 0.5$, r=0.0

FIG. 8

A INC.
(01/04/2000-12/28/2001)

FIG. 9

GEOMETRICAL BROWNIAN
MOTION MODEL

FIG. 10

## A INC.
## (01/04/2000-12/28/2001)

FIG. 11

## GEOMETRICAL BROWNIAN
## MOTION PROCESS

FIG. 12

FIG. 13

FIG. 14

FIG. 15B

FIG. 15A

FIG. 16B

FIG. 16A

## CalPX 1999

FIG. 17

## A INC. (01/04/2000-12/28/2001)

FIG. 18

101

103

MARKET DATA-BASE

PREPROCESS-ING UNIT

108

OPTION SETTING UNIT | 104

BOLTZMAN ENGINE

INITIAL DATA SETTING UNIT | 105

HISTORY NUM-BER SETTING UNIT | 106

PERIOD SETTING UNIT | 107

109

OUTPUT UNIT

FIG. 19

FIG. 20

START

RETRIEVES HISTORICAL PRICE DATA AND
TRADING VOLUME DATA — S101

SETS A TIME TO
MATURITY $\tau$ — S102

SETS CURRENT PRICE S, STRIKE PRICE K
AND RISK-FREE INTEREST RATE r — S103

COMPUTES A HISTORICAL
VOLATILITY OF PER YEAR RATE $\sigma$ — S104

SETS TOTAL HISTORY NUNBER N
AND COMPUTING PERIOD $\Delta t$ — S105

COMPUTES BOLTZMAN EQUATION
BY MONTE CARLO METHOD — S106

COMPUTES AN OPTION PRICE FROM THE
PROBABILITY DENSITY DISTRIBUTION AND
EVALUATES THE PRICE — S107

OUTPUTS RESULTS — S108

END

FIG. 21

START

SETS TEMPERATURE
PARAMETERS $T_0$, $c_0$, $g_0$ — S111

HISTORY NUMBER
$I=1$ — S112

L11

$t=0$ — S113

SETS INITIAL PARTICLE
DISTRIBUTION — S114

L12

ADVANCES THE HISTORY NUMBER
OF MONTE CARLO METHOD
$S_{I+1}=S_I+\Delta S$

S115

TIME $t=t+\Delta t$ — S116

S117 NO

$t=\tau$ ?

YES

ITERATION OF
THE HISTORY
$I=I+1$ — S118

NO

S119

$I=N$ ?

YES

RETURN

FIG. 22

FIG. 23

FIG. 24

FIG. 25

MARKET DATA-BASE — 1101

PREPROCE-SSING UNIT — 1103

REFERENCE SETTING UNIT — 1102

BOLTZMAN ENGINE — 1108

OPTION SET-TING UNIT — 1104

INITIAL DATA SETTING UNIT — 1105

HISTORY NUMBER SETTING UNIT — 1106

PERIOD SETTING UNIT — 1107

OUTPUT UNIT — 1109

FIG. 26

FIG. 27

START

RETRIEVS HISTORICAL PRICE DATA AND TRADING VOLUME — S121

TESTS RANDOMNESS — S122

TESTS AND ELIMINATES REGULAR FLUCTUATION COMPONENTS — S123

SETS THE TIME TO MATURITY $\tau$ — S124

DEFINEDS CURRENT PRICE S AND STRIKE PRICE K, AND SETS RISK-FREE INTEREST RATE r — S125

COMPUTES THE HISTORICAL VOLATILITY OF PER YEAR RATE $\sigma$ — S126

SETS PERTAINING PARAMETERS — S127

COMPUTES BOLTZMAN EQUATION BY MOTE CARLO METHOD — S128

ADJUSTS THE REGULAR FLUCTUATION COMPONENTS — S129

COMPUTES OPTION PRICE FROM THE PROBABILITY DENSITY FUNCTION — S130

OUTPUTS THE RESULTS — S131

RETURN

FIG. 28

FIG. 29

FIG. 30

FIG. 31

MARKET DATABASE — 1301

PREPROCE-SSING UNIT — 1303

REFERENCE SETTING UNIT — 1302

GEOMETRICAL BROWNIAN MOTION MODEL — 1308

OPTION SETTING UNIT — 1304

INITIAL DATA SETTING UNIT — 1305

NUMBER OF HISTORY SETTING UNIT — 1306

PERIOD SETTING UNIT — 1307

OUTPUT UNIT — 1309

FIG. 32

PX DEMAND DATA X1

TEMPERATURE DATA X2

FUEL COST DATA X3

xxx DATA X4

⋮

xxx DATA Xn

PRICE DATA Y

2010

MULTIPLE
REGRESSION
ANALYSIS

REGRESSION
EXPRESSION
$Y=f(X1,X2,X3, ... ,Xn)$

2011

CORRELATION COEFFECIENT,
COVARIANCE MATRIX

2012

RANDOM NUBER FROM
MULIDIMENSIONAL NORMAL
DISTRIBUTION

FIG. 33A

(A1)    (CONT. ON FIG.33B)    (A2)

(CONT. FROM FIG.33A)

A1

A2

2041 — SIMULATION OF DEMAND FLUCTUATIONS

2042 — SIMULATION OF TEMPERATURE FLUCTUATIONS

2043 — SIMULATION OF FUEL COST FLUCTUATIONS

2044 — SIMULATION OF xxx FLUCTUATIONS

204n — SIMULATION OF xxx FLUCTUATIONS

2020 — EVALUATION UNIT OF PRICE FLUCTUATIONS

REGRESSION EQUATION
$Y=f(X1,X2,X3,\cdots,Xn)$

PX DEMAND FLUCTUATION DATA

2050 — RISK MEASURING UNIT

2060 — RISK MANAGING UNIT

FIG. 33B

EP 1 363 219 A1

FIG. 34

FIG. 35

FIG. 36

FIG. 37A

FIG. 37B

FIG. 37C

FIG. 37D

FIG. 37E

FIG. 37F

FIG. 38A

FIG. 38B

FIG. 38C

FIG. 38D

FIG. 38E

FIG. 38F

FIG. 39

FIG. 40

FIG. 41

FIG. 42

FIG. 43B

FIG. 43A

FIG. 44A

FIG. 44B

EP 1 363 219 A1

FIG.45

FIG. 46

FIG. 47

FIG. 48

FIG. 49

FIG. 50

BS MODEL CalPX (2000/10/19-11/18)

FIG. 51A

FIG. 51B

FIG. 51C

FIG. 52A

FIG. 52B

FIG. 52C

**European Patent Office**

# DECLARATION

which under Rule 45 of the European Patent Convention shall be considered, for the purposes of subsequent proceedings, as the European search report

**Application Number**

EP 03 00 9863

| | |
|---|---|
| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 22 August 2003 | van der Weiden, A |

EPO FORM 1504 (P04C37)